# EUROPEAN PATENT SPECIFICATION

(11) **EP 2 624 538 B1**
(45) Date of publication and mention of the grant of the patent: **22.04.2015**
(21) Application number: 13154016.3
(22) Date of filing: 05.02.2013
(51) Int. Cl.: H04N 5/232

(54) **Image signal processing apparatus and image signal processing method**
Bildsignalverarbeitungsgerät und Bildsignalverarbeitungsverfahren
Appareil et procédé de traitement de signal d'images

(30) Priority: 06.02.2012 JP 2012022651
(43) Date of publication of application: 07.08.2013
(73) Proprietor: Hitachi Industry & Control Solutions, Ltd., Hitachi-shi Ibaraki (JP)
(72) Inventor: Ohbuchi, Mari, Chiyoda-ku, Tokyo 100-8220 (JP); Shiokawa, Junji, Chiyoda-ku, Tokyo 100-8220 (JP); Ichige, Kenji, Chiyoda-ku, Tokyo 100-8220 (JP); Sai, Hirotomo, Chiyoda-ku, Tokyo 100-8220 (JP)
(74) Representative: Calderbank, Thomas Roger

(56) References cited:
- JP-A- 2005 055 746
- JP-A- 2007 072 095
- US-A1- 2001 028 402
- US-A1- 2004 196 401
- US-A1- 2009 059 025

## Description

The present invention relates to an image signal processing apparatus and image signal processing method.

One prior art in this technical field is disclosed, for example, in JP-A-2010-286791. This Japanese patent literature involves a written content which reads as follows: "[Object] To achieve focus by correctly and easily determining a focusing position even in a scene in which a point light source exists. [Solving Means] A CPU 70 is equipped as a focal evaluation value calculation unit for setting in an image a plurality of size-different focal evaluation value calculation areas and for calculating a focal evaluation value of the image contrast with respect to each focal evaluation value calculation area while moving a focus lens 52 by a lens driver 55, an area select means for selecting a focusing determination area used to determine a focus position of the focus lens 52 from among the plurality of focal evaluation value calculation areas based on the presence/absence of a point light source in the image, and a focus control means for determining the focus position of the focus lens 52 based on the focal evaluation value in focus determination area and for moving the focus lens 52 to its focus position by the lens driver 55."

US 2009/059025 discloses an electronic camera that includes an image sensor. The image sensor has an imaging surface irradiated with an optical image of an object scene through a focus lens and repeatedly generates an object scene image. A CPU executes an AF process for adjusting a distance from the focus lens to the imaging surface to a distance corresponding to a focal point, based on the object scene image generated by the image sensor. However, the CPU has a high-luminance excluding function for excluding from a target to be noticed of the AF process a partial image having a luminance exceeding "TH1" out of the object scene image generated by the image sensor. The CPU determines whether or not a partial image having a luminance exceeding "TH2" larger than "TH1" exists on the object scene image generated by the image sensor, and turns on the high-luminance excluding function when a determination result is affirmative and turns off the high-luminance excluding function when the determination result is negative.

US 2001/028402 discloses a still camera that utilizes a focus evaluation value based on an imaging video signal to execute an autofocus operation by a hill-climbing control method. A CPU divides a focus area into a plurality of regions to obtain a focus evaluation value from a digital integrator for each of the regions. When the autofocus operation is restarted from the state of a monitoring mode in accordance with a variation of the focus evaluation value, the CPU detects a further hill of the focus evaluation value while forcibly moving a focus lens position always toward a near side, and when a maximal value of the once detected focus evaluation value is less than a certain standard value, additionally executes the autofocus operation.

US 2004/196401 discloses a focus detection apparatus is disclosed which enables accurate AF operations without a focusing judgment performed in an out-of-focus state even when taking an image including a high-luminance object. The focus detection apparatus generates luminance information of each pixel by using an output from a plurality of pixels of a photoelectric converting element which photoelectrically converts an object image formed by an optical system, and enumerates the number of at least one of pixels whose luminance information is higher than a predetermined luminance and pixels whose luminance information is lower than a predetermined luminance. And, information according to the enumerated result is outputted as the focusing information. The predetermined luminance is set based on the luminance information.

Although JP-A-2010-286791 suggests detecting a high-brightness pixel by comparing a brightness value to threshold, it fails to teach the technique for making this threshold variable and is silent about control sequences.

The invention may provide an image signal processing apparatus and image signal processing method capable of accurately focusing on a target object with existence of a high-brightness area, such as a point light source or the like, by applying variable control at an appropriate timing to a threshold used for high-brightness pixel detection in the process of performing autofocus (AF) control-in particular, AF control with support for scenes containing therein point light sources, for example.

Below is a brief summary of representative aspects of and options for the invention as disclosed herein.

According to a first aspect of the present invention there is provided an image signal processing apparatus according to claim 1.

According to a second aspect of the present invention there is provided an image signal processing method according to claim 3.

According to a third aspect of the present invention there is provided an image signal processing method according to claim 4.

In accordance with this invention, it may be possible to provide an image signal processing apparatus and image signal processing method capable of achieving focus with increased accuracy even for a shooting object with a high-brightness area existing therein, such as a point light source or the like.

Other objects, features and advantages of the invention will become apparent from the following description of the embodiments of the invention taken in conjunction with the accompanying drawings.
In the drawings:
Fig. 1 is a diagram for explanation of one example of a fundamental configuration in Embodiment 1.
Fig. 2 is a diagram for explanation of one example of a focal evaluation value used to determine strength/weakness of the contrast in an ordinary imaging object with no point light sources existing therein.
Fig. 3 is a diagram for explanation of one example of a focal evaluation value in the case of an imaging object which contains a point light source or sources.
Fig. 4 is a diagram illustrating one example of a focal evaluation value calculation area which is set in the plane of a screen along with a matrix of divided areas defined therein.
Fig. 5 is a diagram for explanation of one exemplary brightness-adaptive autofocus (AF) control.
Fig. 6 is a diagram showing one example of a flow of processing for getting AF control started in response to detection of a change of an object being imaged.
Fig. 7 is a diagram showing one example of a flow of brightness-adaptive AF control processing for checking brightness distribution information to thereby start controlling a high-brightness pixel judging threshold.
Fig. 8 is a diagram showing one example of a detailed flow of threshold control start judgment processing at step S702 in Fig. 7.
Fig. 9 is a diagram showing one example of a detailed flow of high-brightness pixel presence/absence check processing at step S704 in Fig. 7.
Fig. 10 is a diagram showing one example of a detailed flow of brightness-adaptive AF control for checking brightness distribution data to stop the control of high-brightness pixel judgment threshold.
Fig. 11 is a diagram showing one example of a detailed flow of threshold control stop decision processing at step S1002 in Fig. 10.
Fig. 12 is a diagram showing one example of a flow of brightness-adaptive AF control for aborting variable control of high-brightness pixel decision threshold at the time of achieving focus.
Fig. 13 is a diagram illustrating one example of a basic configuration in Embodiment 2.
Fig. 14 is a diagram depicting one example of a flow of brightness-adaptive AF control processing for judging an elapsed time and for starting controlling a high-brightness pixel decision threshold.
Fig. 15 is a diagram showing one example of a detailed flow of threshold control start judgment processing at step S1403 in Fig. 14.
Fig. 16 is a diagram showing one example of a flow of brightness-adaptive AF control processing for judging an elapsed time from startup of AF control to thereby stop the control of high-brightness pixel threshold.
Fig. 17 is a diagram showing one example of a detailed flow of threshold control stop judgment processing of step S1603 in Fig. 16.
Fig. 18 is a diagram depicting one example of a basic arrangement in Embodiment 3.
Fig. 19 is a diagram showing one example of a detailed flow of threshold control start judging processing at step S702 in Fig. 7, at step S1202 in Fig. 12 or at step S1403 in Fig. 14.
Fig. 20 is a diagram illustrating one example of a basic configuration in Embodiment 4.

Currently preferred embodiments of this invention will now be described with reference to the accompanying drawings below.

### (1-1) System Configuration of Embodiment 1

An explanation will here be given, using some drawings, of one exemplary configuration of an autofocus (AF) control system capable of achieving focus with increased accuracy in scenes in which exist high-brightness imaging objects, such as point light sources or the like.

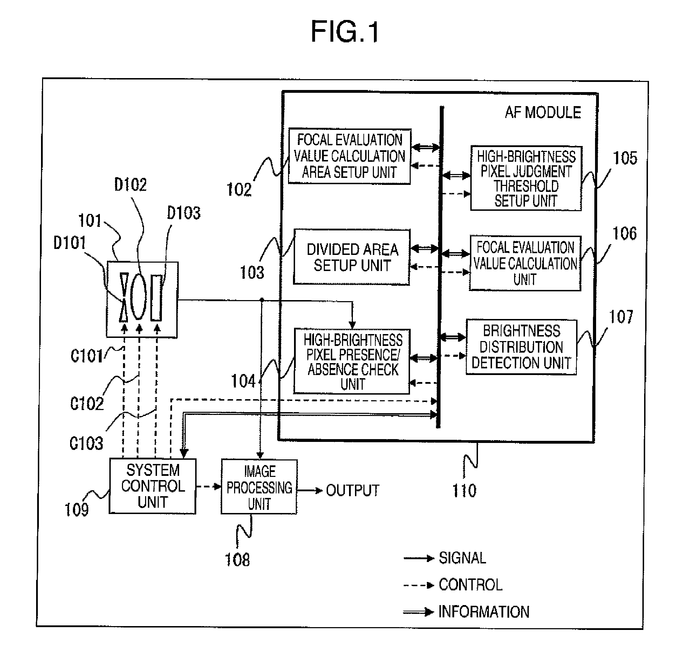

See Fig. 1, which is a diagram illustrating one example of a fundamental configuration of an AF imaging device in accordance with one embodiment of this invention. The illustrative device includes an imaging unit 101, which is made up of an aperture diaphragm D101 which adjusts the quantity of incident light from an object being shot, a focus lens D102 for focal adjustment of the light that has passed through the aperture D101, and an image pickup element D103 which photoelectrically converts the light that passed through the focus lens D102 and outputs it as an image signal. A focal evaluation value calculation area setup unit 102 is operatively responsive to receipt of a command from a system control unit 109, for setting a given number of areas with given sizes at arbitrary positions, which areas act as target objects to be subjected to focal evaluation value calculation processing. A divided area setup unit 103 operates, in responding to receipt of a command from the system control unit 109, to set a matrix of given numbers of rows and columns of divided areas having given sizes at given positions within the area that was set by the focal evaluation value calculation area setup unit 102. A high-brightness pixel presence/absence check unit 104 operates, in response to a command from the system control unit 109, to determine the presence or absence of a specific pixel with relatively high brightness in each of the areas defined by the divided area setup unit 103. A high-brightness pixel judgment threshold setup unit 105 sets a high-brightness pixel judging threshold value for use by the high-brightness pixel presence/absence checker 104 in response to a command from the system controller 109. A focal evaluation value calculation unit 106 is responsive to a command from the system controller 109, for using a judgment result of the high-brightness pixel presence/absence checker 104 to calculate a focal evaluation value by using an image signal(s) of an area(s) obtained by exclusion of high-brightness pixel-containing areas from the focal evaluation value calculation area. The focal evaluation value as used herein is, for example, a signal indicating a result of multiplication of high-frequency components per line of image signal, for the purpose of detecting the strength of a contour part of an image signal of a designated area. A brightness distribution detection unit 107 detects the brightness distribution of an image signal. An image processing unit 108 is responsive to an instruction from the system controller 109, for applying to an image signal(s) the image signal processing including noise rejection, gamma correction, contour emphasis, filtering, zooming, camera shake compensation and image recognition and also for performing output interface processing for conversion to a signal format of output equipment, such as a television (TV) set, storage, etc. The output interface processing is, for example, the one that converts into an NTSC or PAL video output. Another example of it is the one that converts to a high-definition multimedia interface (HDMI) signal. Other examples include the one that converts to a predefined signal for transmission over networks. Although not specifically illustrated, it may be arranged to have an external device, such as an electrically erasable programmable read-only memory (EEPROM) or a flash memory used for storage of various setup data. The system controller 109 controls the image pickup unit 101, focal evaluation value calculation area setup unit 102, divided area setup unit 103, high-brightness pixel presence/absence checker 104, high-brightness pixel decision threshold setup unit 105, focal evaluation value calculator 106, brightness distribution detector 107 and image processing unit 108. An AF module 110 is made up of these functional blocks required for execution of AF control. Two or more AF modules may be provided in one image signal processing apparatus.

With the system configuration stated above, it is possible for the system controller 109 to use the information from brightness distribution detection unit 107 to detect timings for start and stop of variable control of the high-brightness pixel decision threshold, possible for the high-brightness pixel presence/absence checker 104 to use such high-brightness pixel decision threshold to determine or "judge" an area or areas containing therein high-brightness pixels, and possible for the focal evaluation value calculator 106 to use such judgment result to compute the focal evaluation value after having excluded the high-brightness pixel-containing areas from the focal evaluation value calculation area. This in turn makes it possible, in scenes with point light source existing therein, to achieve high-accuracy autofocusing (AF) without the risk of lens control becoming unstable due to an improper change in high-brightness pixel decision threshold value, while simultaneously suppressing the processing load otherwise increasing due to the variable control of high-brightness pixel decision threshold.

### (1-2) Regarding Calculation of Focal Evaluation Value

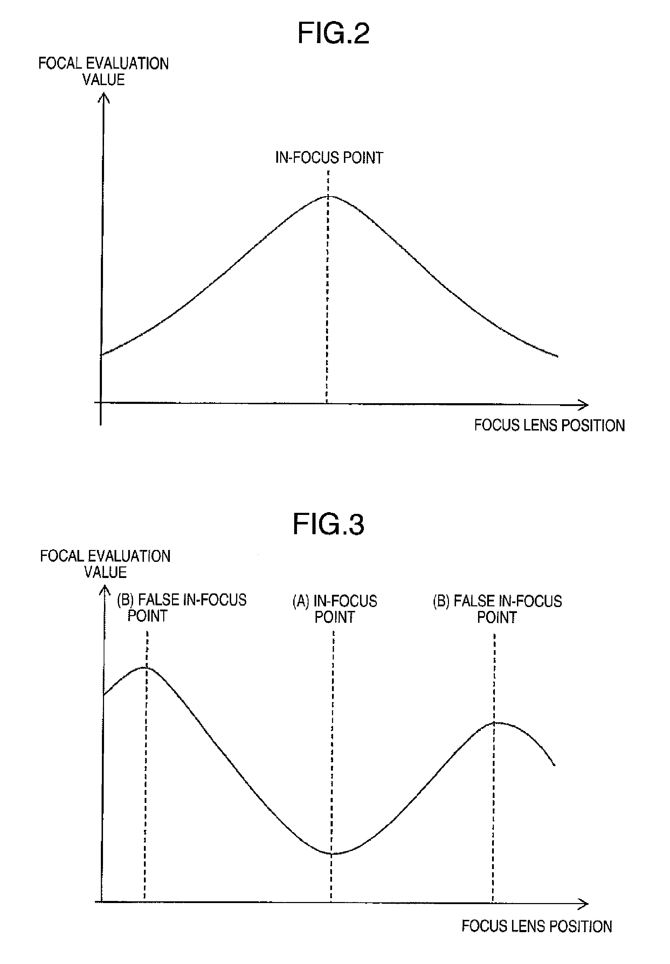

Fig. 2 is a graph for explanation of one example of the focal evaluation value used to determine strength/weakness of the contrast in an ordinary shooting object with no point light sources existing therein. The transverse axis of this graph represents the position of focus lens position whereas the vertical axis indicates focal evaluation value. A focus lens position at which the object of interest comes into focus will be referred to as the in-focus point hereinafter. In ordinary shooting objects, as the focus lens comes close to the in-focus point, the image's contour portion becomes stronger; so, the focal evaluation value increases in level; as it goes away, the contour part becomes weaker, resulting in a likewise decrease. For this reason, by controlling the focus lens to move to a peak position of the focal evaluation value, it is possible to achieve focusing on the shooting object with increased accuracy.

Fig. 3 is a graph for explanation of one exemplary focal evaluation value in the case of a shooting object which contains a point light source. Although the intrinsic in-focus point is a focus lens position shown by "A" in Fig. 3, the focal evaluation value at this point A does not reach its peak. The reason of this is as follows: in view of the fact that the point light source is seen to be blurred and larger in size as it goes far away from the in-focus point, the contour portion becomes stronger with an increase in distance from the in-focus point, resulting in the focal evaluation value becoming greater than the in-focus point. Consequently, when performing prior-known AF control which forces the focus lens to move to a focal evaluation value-maximized position with respect to the point light source-containing object being imaged, this would result in the focus lens stopping with a false in-focus point being as its in-focus point. In this embodiment the false in-focus point refers to a focus lens point at which the focus lens is stopped by AF control irrespective of the fact that it is not the true in-focus point. The focus lens's stopping at such false in-focus point results in generation of what is called the out-of-focus or defocusing-i.e., the lack in sharpness in an image photographed.

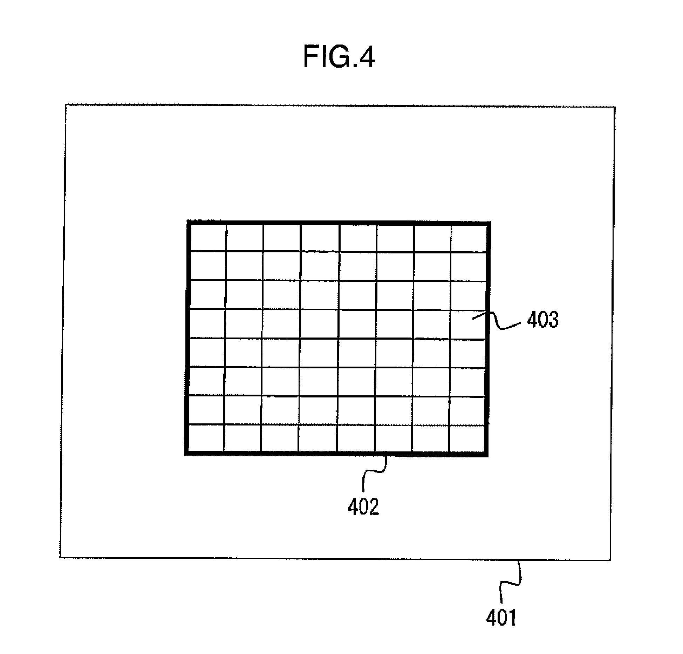

Fig. 4 is a diagram illustrating an exemplary focal point evaluation value calculation area which was set in the plane of a screen and a matrix of rows and columns of divided areas defined in the area. An outermost frame indicated by reference numeral 401 is an outer frame of the screen. A frame 402 is the focal evaluation value calculation area, which may be arranged to have its size greater than or equal to that of the outer frame of screen although it is desirable that the former be smaller in size than the latter in order to avoid occurrence of the so-called rear-focusing, i.e., focusing on not the shooting subject but its background. Areas 403 are set in the frame 402 by the divided area setup unit 103 shown in Fig. 1. Note that in Fig. 4, there is shown a case where the frame 402 is divided into eight rows and eight columns of equal-size portions. By making this division number equal to the number of pixels within the frame, it is possible to realize high-brightness pixel detection in units of individual pixels. Although in the case of the divided area setter 103 (Fig. 1) being realized by hardware an excessive increase of the division number results in a hardware cost increase, the division number may be designed to increase in order to improve the performance or, alternatively, may be decreased for cost reduction of processing.

### (1-3) Detecting Variable Threshold Control Start Timing Depending On Brightness Distribution

To achieve high-accuracy AF control consistently in scenes with point light sources existing therein, it is required to detect a point light source-containing area appropriately and then exclude this area from the focal evaluation value calculation area. However, it will possibly happen that the brightness of a point light source decreases due to reduction of the ambient illumination intensity or the illuminance of the light source per se. In such case, if the high-brightness pixel decision threshold value is kept at a fixed value, it is no longer possible, especially in the case of the point light source-containing area decreasing in brightness, to judge the point light source-containing area to be a high-brightness pixel, causing it to be contained in the focal evaluation value calculation target. This results in being unable to perform accurate AF control. In view of this, it is necessary to perform variable control of the high-brightness pixel decision threshold in such a way as to set an appropriate high-brightness pixel decision threshold value in cases where the point light source-containing area decreases in brightness. On the other hand, in case the ambient illuminance is of a sufficient level, the variable control of high-brightness pixel decision threshold value is not necessary because the point light source-containing area is expected to remain at an acceptable degree of brightness owing to the AF control. Here, an explanation will be given of the processing for starting the variable control when the point light source-containing area decreases in brightness.

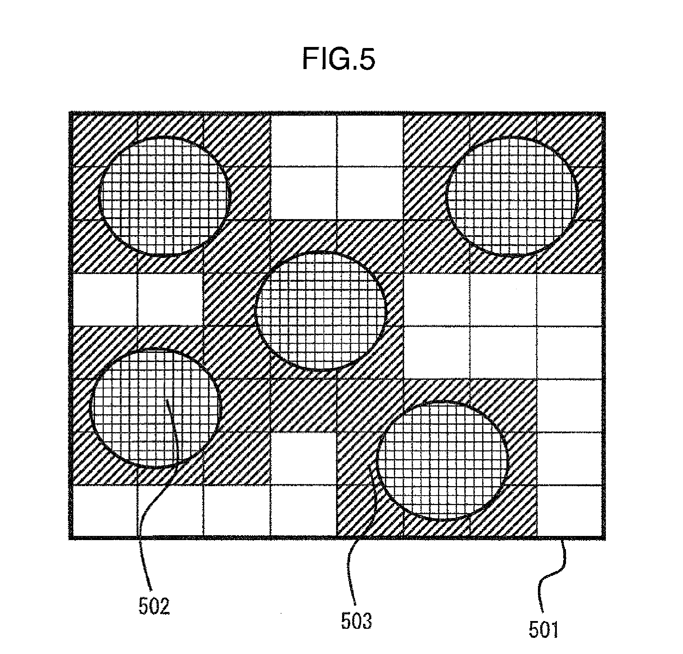

A brightness-adaptive AF control technique will now be described with reference to Figs. 5 through 9, which is to detect the timing for startup of the variable control of high-brightness pixel decision threshold value to thereby achieve accurate focusing at all times in scenes in which high-brightness pixels exist.

Fig. 5 is a diagram for explanation of one example of the brightness-adaptive AF control. A frame 501 is a focal evaluation value calculation target area which is set within the screen in a similar manner to the frame 402 shown in Fig. 4. Numeral 502 designates point light sources existing within the frame 501. In this state, areas which are determined by the high-brightness pixel presence/absence checker 104 of Fig. 1 to contain therein high-brightness pixels are indicated by square mesh-like hatching, with numeral 503 adhered thereto. The focal evaluation value calculator 106 (Fig. 1) serves to calculate a focal evaluation value by using image signals of hatching-eliminated areas.

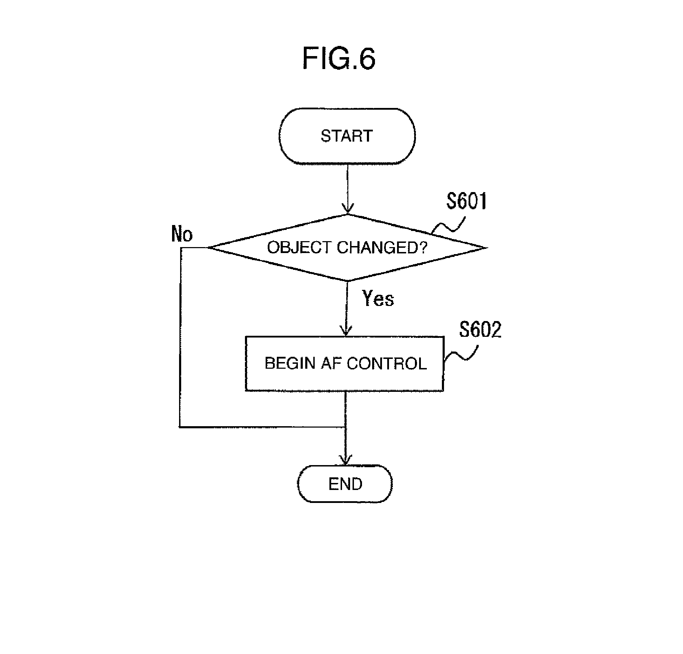

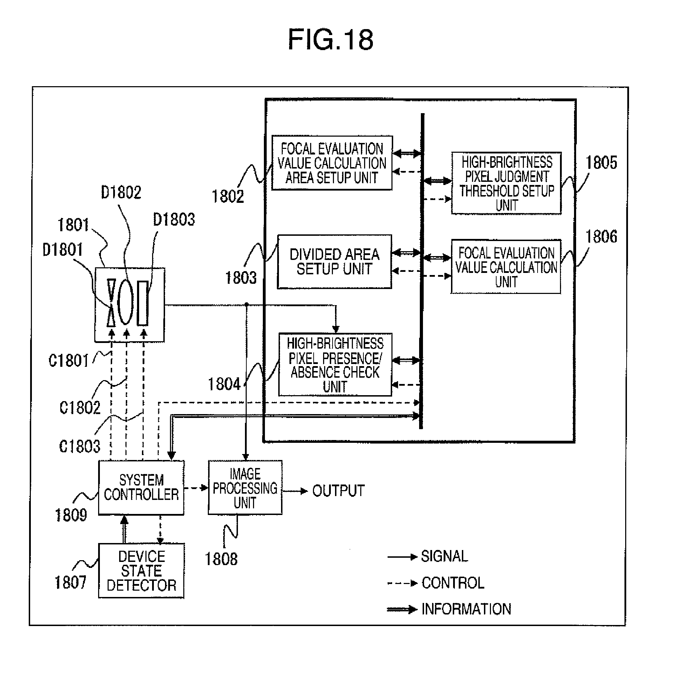

Fig. 6 is a diagram showing one example of a flow of processing for starting AF control by detecting a change of the target object being imaged. The processing of Fig. 6 is executed by the system control unit 109 shown in Fig. 1. In step S601, the system controller 109 (Fig. 1) determines whether or not the imaging object changed. If "Yes" at this step, i.e., when the object changed, the procedure goes to step S602 which gets AF control started. If "No" at step S601 then terminate the processing. Note here that the detection of a change of the imaging object may be arranged to use any one of the following: the amount of a change in histogram information obtained from the brightness distribution detector 107 (Fig. 1), a change amount of the average illuminance of a predefined area, a change amount of the focal evaluation value obtained from the focal evaluation value calculator 106 (Fig. 1), a change amount of the aperture D101 during AF control, a shutter speed change amount, and a change amount of device state to be obtained from a device state detector unit 1807 (Fig. 18). Additionally, the AF control start judging processing as disclosed herein is also applicable to all AF control methods as will be described later.

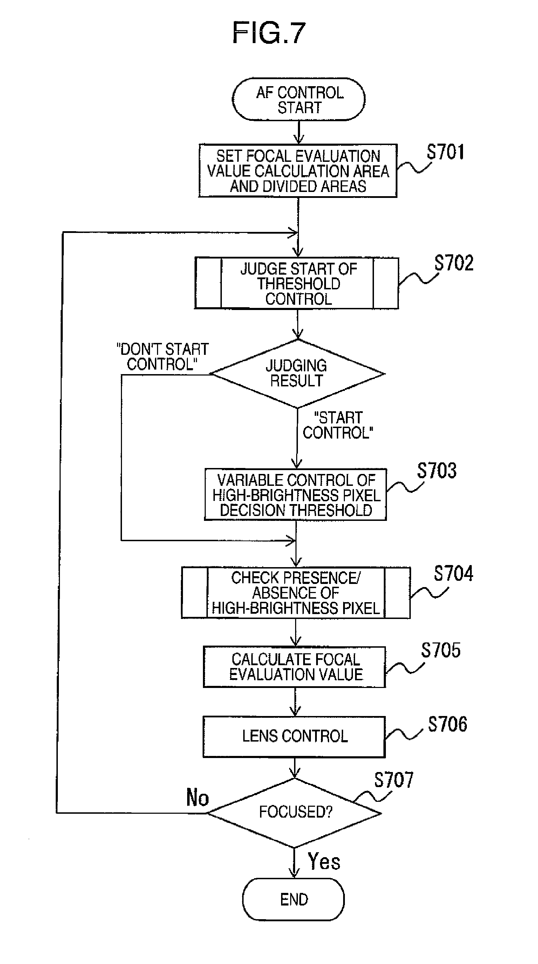

Fig. 7 is a diagram showing one example of a flow of the brightness-adaptive AF control processing for checking brightness distribution information to thereby start controlling a high-brightness pixel decision threshold value. The processing of Fig. 7 is executed by the system control unit 109 of Fig. 1. This scheme is for letting the system controller 109 (Fig. 1) determine startup of controlling the high-brightness pixel decision threshold value used by the high-brightness pixel presence/absence checker 104 (Fig. 1) in compliance with the brightness distribution data of the object being imaged. Additionally, the high-brightness pixel decision threshold value is preset to a predetermined value as its default value prior to the startup of AF control. This predetermined value may be a value stored in a memory such as EEPROM; alternatively, it may be a fixed value. Upon startup of AF control, in step S701, the system controller 109 (Fig. 1) commands the focal evaluation value calculation area setup unit 102 (Fig. 1) and divided area setup unit 103 (Fig. 1) to set areas in the screen plane as shown in Fig. 4, for example. In step S702, the system controller 109 (Fig. 1) determines or "judges" whether to start the variable control of high-brightness pixel decision threshold value. This processing at step S702 will be described later in greater detail. At step S703 the high-brightness pixel decision threshold value is subjected to variable control in a case where the judgment result of step S702 is "Start Control." Once after the variable control gets started, this variable control remains effective until the variable control of high-brightness pixel decision threshold is interrupted. At step S704, in case the judgment result of step S702 is "Don't Start Control," the system controller 109 (Fig. 1) commands the high-brightness pixel presence/absence checker 104 (Fig. 1) to use the variable control of high-brightness pixel decision threshold that was preset prior to the startup of AF control to judge whether a high-brightness pixel is present or absent in each of the divided areas defined at step S701. In case the system procedure goes from step S703 to step S704, the high-brightness pixel presence/absence judgment is performed using the high-brightness pixel decision threshold value that was set at step S703. A detailed explanation of step S704 will be given later. At step S705 the system controller 109 (Fig. 1) gives a command to compute the focal evaluation value with exclusion of image signals of point light source-containing areas by using the judgment result of step S704 to calculate. At step S706 the system controller 109 (Fig. 1) controls the focus lens to move by a certain distance in a direction on which a peak of the focal evaluation value exists. In step S707 the system controller 109 (Fig. 1) determines whether the focus lens is at its in-focus point. If so, the processing is terminated. If the lens is not at the in-focus point, the procedure returns to step S702, followed by execution of a series of its following processing operations. With this processing, it is possible in the rightness-adaptive AF control, which excludes point light source-containing areas from the focal evaluation value calculation area, to detect the timing for variably controlling the threshold for use in the process of judging whether a high-brightness pixel is present or absent in the area.

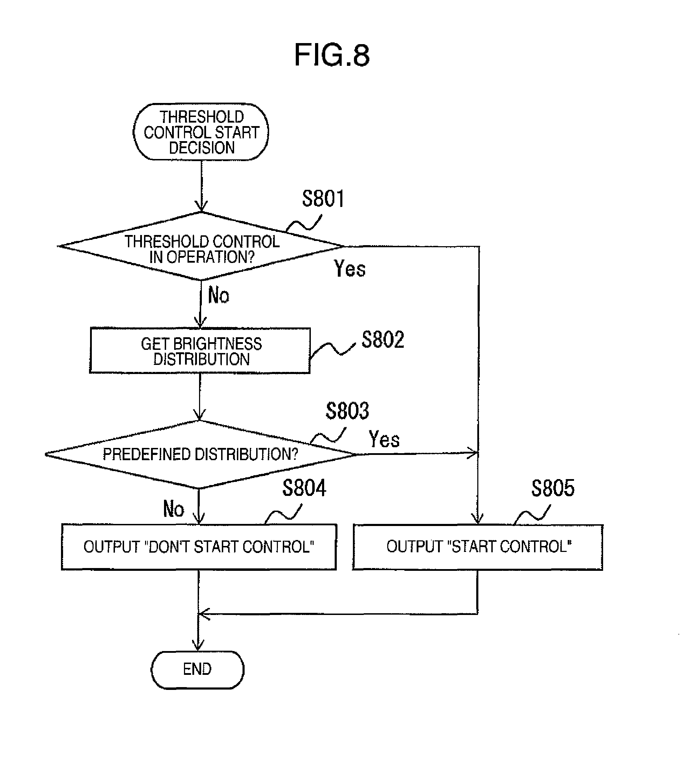

Fig. 8 is a diagram showing one example of a detailed flow of the threshold control start judgment processing at step S702 in Fig. 7. In step S801, the system controller 109 (Fig. 1) determines whether the variable control of high-brightness pixel decision threshold is presently in operation. If the variable control is in operation then output a judgment result of "Start Control," followed by termination of the processing. In other cases, the procedure goes to step S802. For the judgment as to whether the variable control is now in operation, there may be used a flag indicating that the variable control is being performed. This flag is typically designed to become equal to "1" upon startup of the variable control of high-brightness pixel decision threshold and becomes "0" upon termination of it. The variable control stop judgment will be explained later. In step S802 the system controller 109 (Fig. 1) acquires current brightness distribution data from the brightness distribution detector 107 (Fig. 1). In step S803 the system controller 109 (Fig. 1) determines whether the brightness distribution data obtained at step S802 is a predetermined brightness distribution. Being the predetermined brightness distribution is, for example, in a case where the luminance of a high-brightness portion that is estimated to be a point light source is less than or equal to a certain value. This case is considered to be a scene low in brightness of point light source area; so, a need is felt to variably control the high-brightness pixel decision threshold to have a smaller value. Thus, a judgment result of "start Control" is output, followed by termination of the processing. In this threshold control stop judging process, a low-brightness pixel number or a high-brightness pixel number or an average luminance value of predefined area may be used. When at step S803 the distribution is determined not to be the predetermined brightness distribution, a judgment result of "Don't Start Control" is output, followed by termination of the processing.

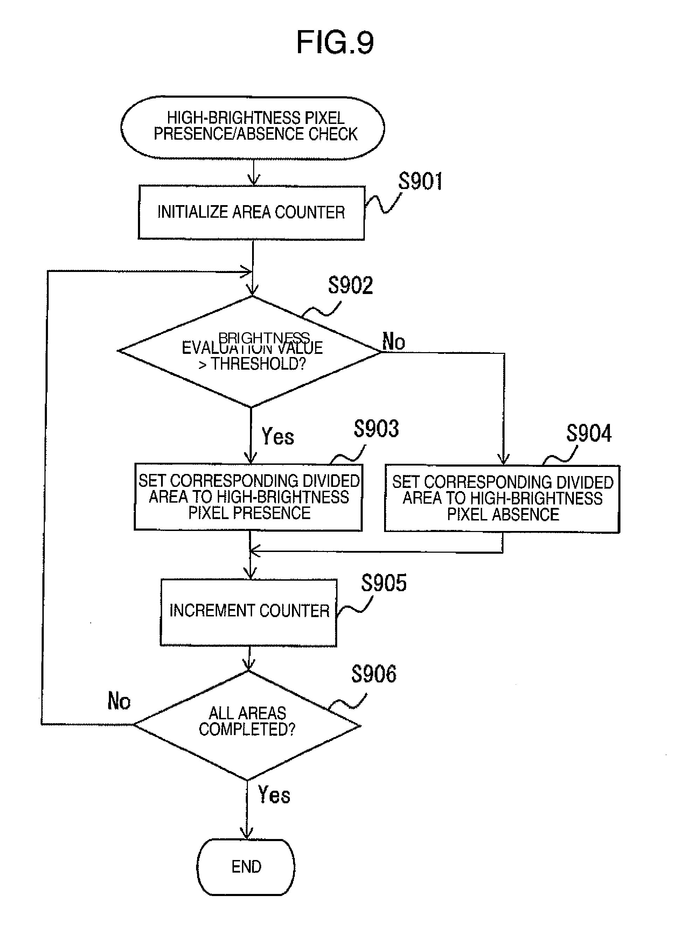

Fig. 9 is a diagram showing one example of a detailed flow of the high-brightness pixel presence/absence judging processing at step 704 in Fig. 7. Here, an explanation will be given by taking as an example the case where the divided area setup unit 103 (Fig. 1) sets divided areas with one pixel being as a unit. The number of such divided areas is acquired in advance. In step S901, the system controller 109 (Fig. 1) initializes an area counter which counts the number of those areas with the high-brightness pixel presence/absence judgment having been already completed. At step S902 the system controller 109 (Fig. 1) compares each area's brightness evaluation value (pixel's luminance value per se in the case of one divided area corresponding to a single pixel) to the high-brightness pixel decision threshold value. If the former is greater than the latter, a decision is made at step S903 to conclude that this area contains a high-brightness pixel. In other cases, it is decided at step S904 that this area contains no high-brightness pixels. At step S905 the system controller 109 (Fig. 1) increments the area counter value by "1." At step S906 the system controller 109 (Fig. 1) compares the area counter value with the divided area number. If the former is less than the latter, the procedure returns to step S902, followed by execution of a series of its following processing operations. In other cases, it is concluded that the high-brightness pixel presence/absence check has already been applied to all of the divided areas; then, the processing is terminated. Although the explanation was given by exemplifying the case where the individual divided area consists of a single pixel, the divided area may alternatively be designed to consist of two or more pixels. If this is the case, the step S902 may be modified to determine the presence of a high-brightness pixel in a case where the average of brightness values of those pixels within a divided area, which average is used as the brightness evaluation value, is greater than the high-brightness pixel decision threshold value or, alternatively, judges the presence of a high-brightness pixel in case a number of pixels existing within the divided area which pixels are greater than the high-brightness pixel decision threshold value exceeds a prespecified numeric value.

With the processing stated above, it is possible to eliminate the execution of the variable control of high-brightness pixel decision threshold under normal conditions and apply variable control to the high-brightness pixel decision threshold only when the need arises, such as in the case of a point light source-containing area changes in luminance value. This in turn makes it possible to achieve the intended brightness-adaptive AF control with increased accuracy and enhanced suppressibility of the processing load while at the same time minimizing the risk of the lens control becoming unstable due to an erroneous operation of changing the high-brightness pixel decision threshold.

### (1-4) Detecting Brightness Distribution-Responsive Variable Threshold Control Stop Timing

As has been stated supra, in the case of the ambient luminance being at a sufficient brightness level, there is no need to perform the variable control of high-brightness pixel decision threshold because the brightness of a point light source-containing area is kept at an acceptable level or more owing to AF control. Here, an explanation will be given of the processing for stopping the variable control in cases where the brightness of point light source-containing area is at a sufficient level, thereby avoiding redundant execution of the variable control of high-brightness pixel decision threshold.

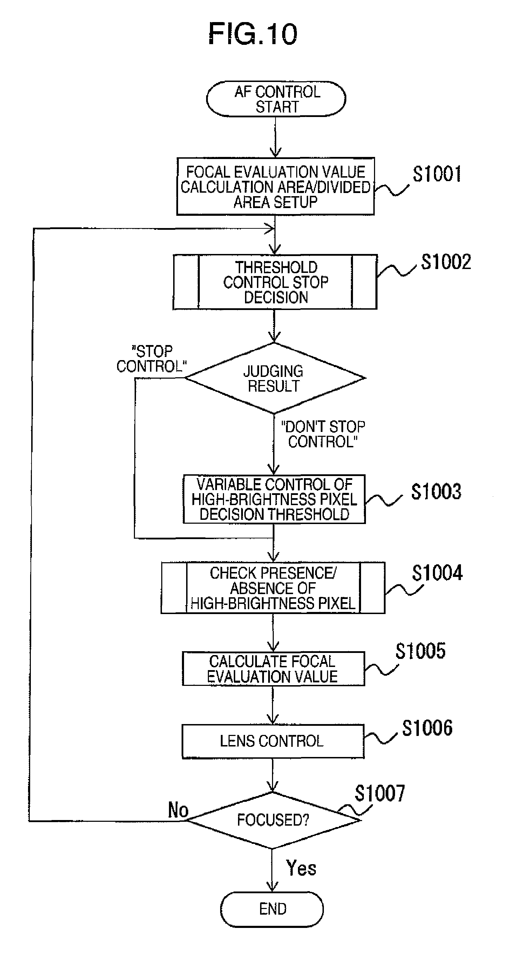

An explanation will be given, using Figs. 10-11, of brightness-adaptive AF control which detects the timing for interruption of the variable control of high-brightness pixel decision threshold to thereby enable achievement of accurate focus on the target at all times in scenes with high-brightness pixels existing therein.

Fig. 10 is a diagram showing one example of a detailed flow of the brightness-adaptive AF control for checking brightness distribution data and for stopping controlling the high-brightness pixel decision threshold. The processing of Fig. 10 is executed by the system controller 109 (Fig. 1). This technique is the one that permits the system controller 109 (Fig. 1) to determine whether to stop the variable control of the high-brightness pixel decision threshold used by the high-brightness pixel presence/absence check unit 104 (Fig. 1) in accordance with the brightness distribution data of an object being imaged. Upon startup of AF control, at step S1001, the system controller 109 (Fig. 1) commands the focal evaluation value calculation area setup unit 102 (Fig. 1) and the divided area setup unit 103 (Fig. 1) to set areas in the screen plane as shown in Fig. 4, for example. In step S1002 the system controller 109 (Fig. 1) determines whether to stop the variable control of high-brightness pixel decision threshold. Details of this step S1002 will be discussed later. At step S1003, variable control is provided to the high-brightness pixel decision threshold in a case where the judgment result of step S1002 is "Don't Stop Control." At step S1004, in case the judgment result of step S1002 is "Stop Control," the system controller 109 (Fig. 1) commands the high-brightness pixel presence/absence checker 104 (Fig. 1) to use the high-brightness pixel decision threshold value to judge whether a high-brightness pixel is present or absent in each of the divided areas defined at step S1001. Regarding the high-brightness pixel decision threshold used at this time will be set forth later. The following processing operations are similar to those executed at corresponding steps shown in Fig. 7.

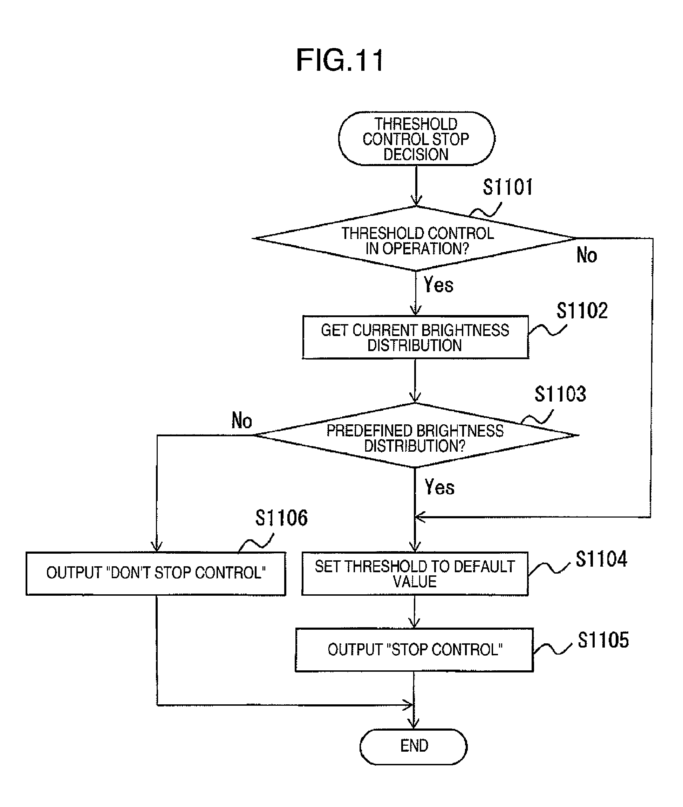

Fig. 11 is a diagram showing one example of a detailed flow of the threshold control stop decision processing at step S1002 in Fig. 10. In step S1101, the system controller 109 (Fig. 1) determines whether the variable control of high-brightness pixel decision threshold is effective. If so, the procedure goes to step S 1102. If not so, proceed to step S 1104. The judgment as to whether the variable control of threshold is effective may be performed using a flag indicating that the control is in operation. The value of this flag is typically designed to become equal to "1" upon startup of the variable threshold control and becomes "0" upon stoppage of it. In step S1102 the system controller 109 (Fig. 1) acquires the currently available brightness distribution data from the brightness distribution detector 107 (Fig. 1). At step S1103 the system controller 109 (Fig. 1) judges whether the brightness distribution data obtained at step S1102 is a prespecified brightness distribution. The prespecified brightness distribution is, for example, in a case where the luminance of a high-brightness portion presumed to be a point light source is greater than or equal to a fixed value. This brightness distribution is considered to be a scene which is high in luminance of point light source; so, there is no need to apply variable control to the high-brightness pixel decision threshold. Thus, the procedure goes to step S1104. In this threshold control stop judging process, a low-brightness pixel number or a high-brightness pixel number or an average brightness value of a predefined area may also be used. At the decision step S1103, when the brightness distribution being checked is not the predetermined one, there is no need to stop the variable control of high-brightness pixel decision threshold; thus, a judgment result of "Don't Start Control" is output, followed by termination of the processing. In step S1104 the system controller 109 (Fig. 1) sets the high-brightness pixel decision threshold to a prespecified value and then outputs a judgment result of "Stop Control," followed by termination of the processing. This prespecified value as used herein may be a value stored in a memory such as EEPROM; alternatively, it may be a fixed value. Optionally, in the case of using a flag indicating that the variable control is being performed, let this flag's value be set to "0."

With the processing stated above, it is possible to stop the variable control of high-brightness pixel decision threshold when not needed. This makes it possible to lower the processing load and also to diminish the risk of the AF control becoming unstable due to malfunction of the variable control.

### (1-5) Variable Threshold Control Stop Processing Upon Focusing

Within a time period of from focus achievement by AF control to the next start of lens motion due to a change of the shooting object, it is unnecessary to perform the variable control of high-brightness pixel decision threshold. Here, an explanation will be given of the processing for stopping the variable control of high-brightness pixel decision threshold upon achieving focus in such a way as to prevent execution of the variable control of high-brightness pixel decision threshold when there is no need to do it.

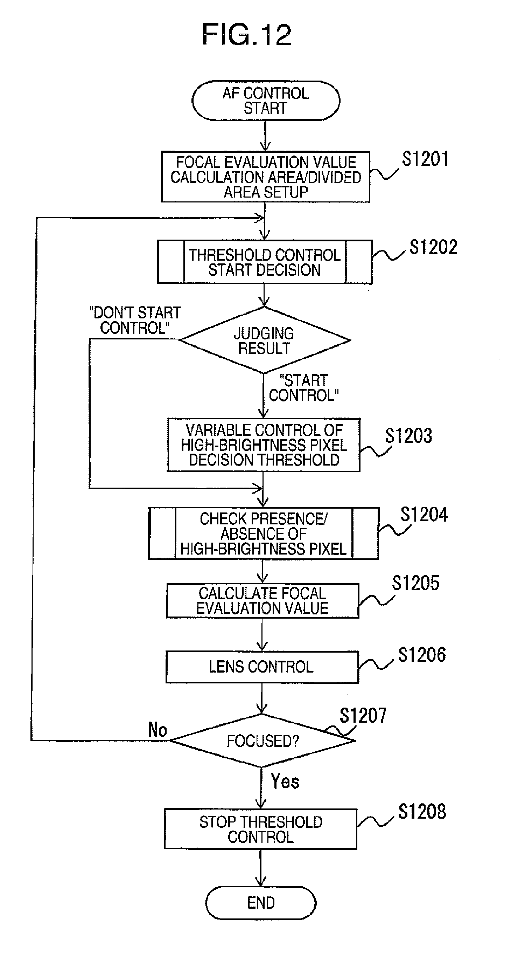

Fig. 12 is a diagram showing one example of a flow of the brightness-adaptive AF control for stopping the variable control of high-brightness pixel decision threshold upon focusing. This processing of Fig. 12 is executed by the system controller 109 (Fig. 1). This scheme is similar to that of Fig. 7 with threshold control stop processing of step S1208 being added thereto. In step S1208, the system controller 109 (Fig. 1) stops the variable control of high-brightness pixel decision threshold in case it was judged to achieve focus at step S1207, and then quits the processing. In the case of using a flag indicating that the variable control is being performed, this flag's value is set at "0."

With the processing above, it is possible to avoid unnecessary execution of the variable control of high-brightness pixel decision threshold. This makes it possible to lessen the processing load and also possible to reduce the risk of the AF control becoming unstable due to malfunction of the variable control.

### (2-1) System Configuration of Embodiment 2

An explanation will here be given, using some drawings, of one exemplary configuration of high-accuracy AF control system suitable for image pickup of scenes in which exist high-brightness shooting objects, such as point light sources.

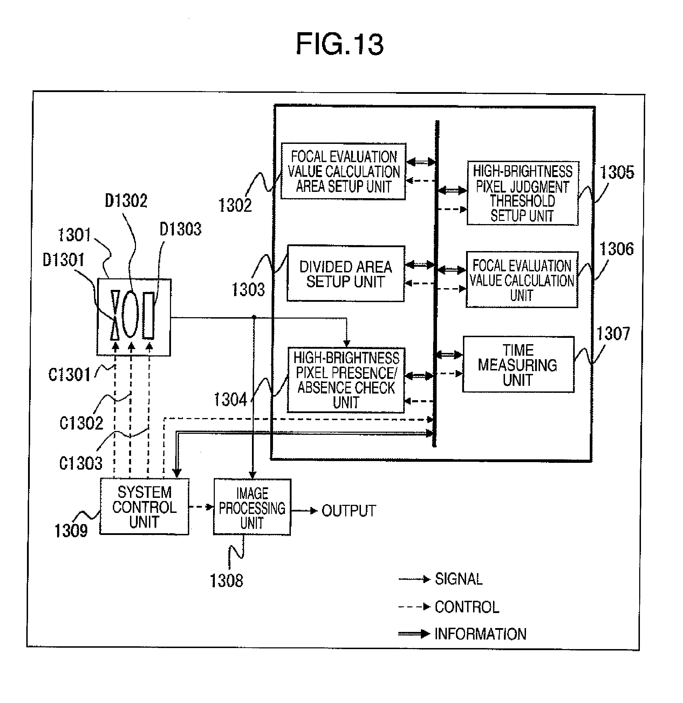

Fig. 13 is a diagram depicting one example of a basic configuration in accordance with another embodiment of this invention. This system configuration has a time measuring unit 1307 in place of the brightness distribution detector 107 of the system configuration shown in Fig. 1. The timer 1307 is responsive to a command from a system control unit 1309, for performing time measurement within a given length of time period.

With the arrangement above, it is possible to accomplish the following functionalities: the system controller 1309 detects a timing of variably control the high-brightness pixel decision threshold using data from the timer 1309; a high-brightness pixel presence/absence check unit 1304 uses the high-brightness pixel decision threshold to determine one or more areas containing therein high-brightness pixels; and, a focal evaluation value calculator 1306 uses such determination result to calculate a focal evaluation value after having excluded the point light source-containing areas from focal evaluation value calculation area. Thus, it becomes possible, in scenes with point light sources existing therein, to realize high-accuracy autofocusing while suppressing the processing load and also avoiding the risk of lens control becoming unstable due to execution of the variable control of high-brightness pixel decision threshold even when there is no need to perform such variable control.

### (2-2) Detecting Elapsed Time-Responsive Variable Threshold Control Start Timing

In some systems, the processing load is relatively high due to execution of other control operations immediately after the AF control gets started; so, it is often desirable to start the variable control of high-brightness pixel decision threshold after a predetermined length of time has elapsed. Here, an explanation will be given of the processing for starting the variable control of high-brightness pixel decision threshold after the elapse of a predetermined length of time since the startup of AF control.

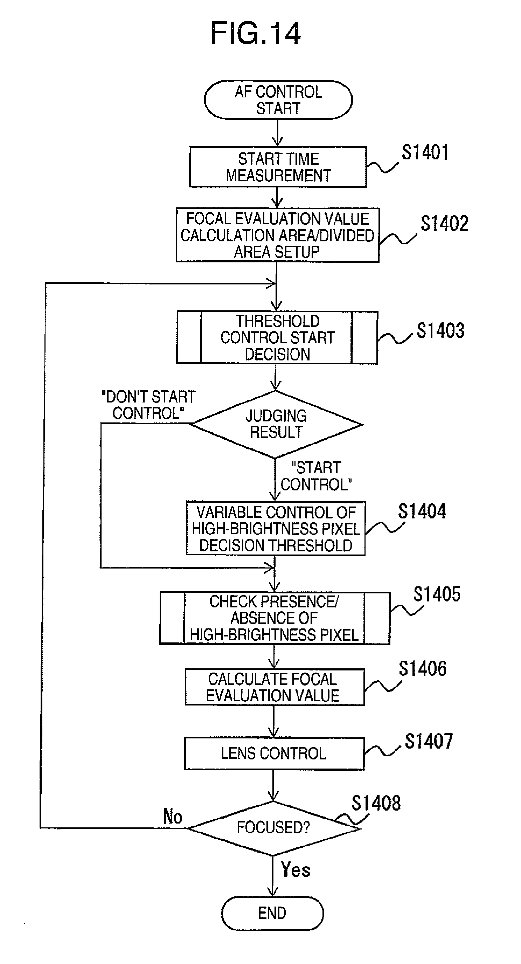

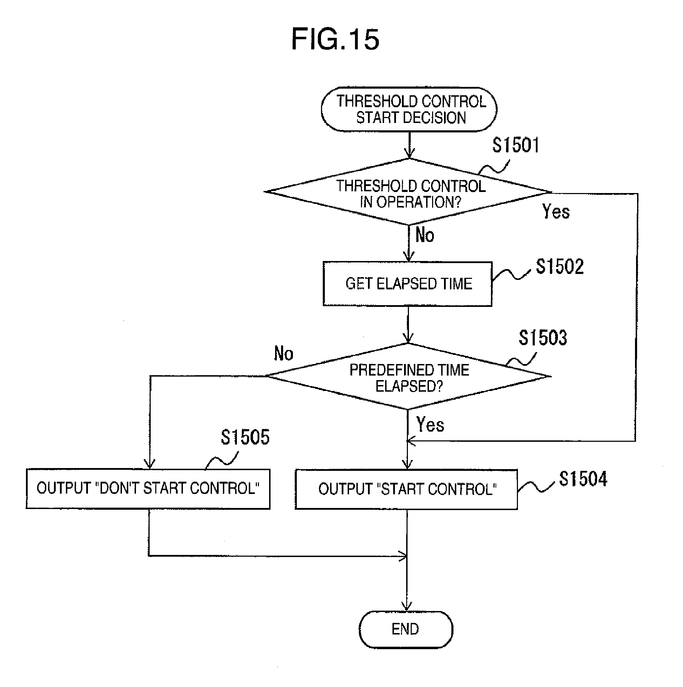

A brightness-adaptive AF control method for detecting the exact timing to start the variable control of high-brightness pixel decision threshold to thereby achieve focus with increased accuracy at all times in scenes of the kind containing therein high-brightness pixels will be described with reference to Figs. 14 and 15.

Fig. 14 is a diagram showing one example of a flow of the brightness-adaptive AF control processing which checks an elapsed time and starts controlling the high-brightness pixel decision threshold. This processing of Fig. 14 is executed by the system control unit 1309 (Fig. 13). The scheme discussed here is for causing the system controller 1309 (Fig. 13) to determine whether to start controlling the high-brightness pixel decision threshold used by the high-brightness pixel presence/absence check unit 1304 (Fig. 13) in accordance with the time elapsed. Upon startup of AF control, the system controller 1309 (Fig. 13) commands in step S1401 the timer 1307 (Fig. 13) to begin time measurement. In step S1402 the system controller 1309 (Fig. 13) commands a focal evaluation value calculation area setup unit 1302 (Fig. 13) and divided area setup unit 1303 (Fig. 13) to set areas in the screen plane as shown in Fig. 4 by way of example. Details of the processing of step S1403 will be set forth later. The subsequent processing operations are similar to corresponding ones of the processing flow shown in Fig. 7. Note here that once after the variable control of high-brightness pixel decision threshold gets started, this control remains effective until it is interrupted.

Fig. 15 is a diagram showing one example of a detailed flow of the threshold control start judgment processing at step S1403 of Fig. 14. In step S 1501 the system controller 1309 (Fig. 13) determines whether the variable control of high-brightness pixel decision threshold is currently in operation. If so, a judgment result of "Start Control" is output, followed by termination of the processing. In other cases, the procedure goes to step S 1502. The judgment as to whether the variable control is now in operation may be made using a flag indicative of the fact that the variable control is being done. Typically, this flag becomes equal to "1" upon startup of the variable control of high-brightness pixel decision threshold and becomes "0" upon stoppage of it. In step S1502 the system controller 1309 (Fig. 13) acquires from the timer 1307 (Fig. 13) the data indicating an elapsed time since AF control startup. At step S 1503 the system controller 1309 (Fig. 13) checks whether the measured time obtained at step S 1502 is in excess of a predetermined value. If the former exceeds the latter, a check result of "Start Control" is output, followed by termination of the processing. In other cases a check result of "Don't Start Control" is output, followed by termination of the processing. The predetermined value as used herein may be a value stored in EEPROM or the like. A fixed value may alternatively be used therefor.

With the processing stated above, it is possible to start the variable control of high-brightness pixel decision threshold after the processing load goes low. This makes it possible to suppress excessive increase of the processing load.

### (2-3) Detecting Elapsed Time-Responsive Variable Threshold Control Stop Timing

In cases where focusing is kept failed even after a while since startup of AF control, this can be due to unstableness of the focal evaluation value, which is caused by execution of the variable control of high-brightness pixel decision threshold. And so, it is needed to abort the variable control of high-brightness pixel decision threshold upon failure to achieve focus. Here, an explanation will be given of the processing for stopping the variable control after elapse of a prespecified length of time since the startup of AF control.

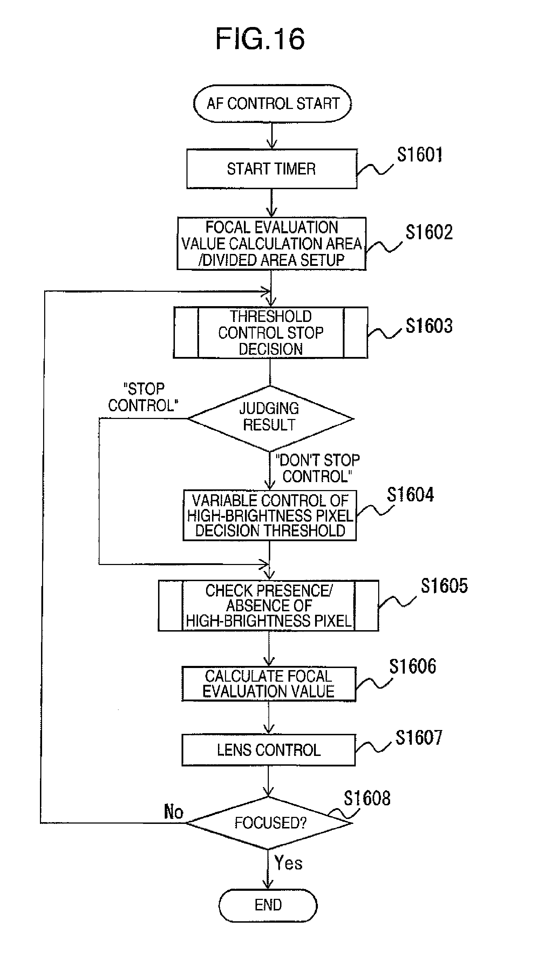

A brightness-adaptive AF control method for achieving focus with increased accuracy at all times in scenes containing therein high-brightness pixels, by detecting the exact timing to stop the variable control of high-brightness pixel decision threshold will be described with reference to Figs. 16-17.

Fig. 16 is a diagram showing one example of the flow of brightness-adaptive AF control processing for measuring an elapsed time from startup of AF control and for stopping the control of high-brightness pixel threshold. This processing of Fig. 16 is executed by the system controller 1309 (Fig. 13). This scheme is the one that causes the system controller 1309 (Fig. 13) to determine whether to stop the variable control of high-brightness pixel decision threshold used by the high-brightness pixel presence/absence checker 1304 (Fig. 13) in accordance with the elapsed time from AF control startup. After AF control gets started, the system controller 1309 (Fig. 13) commands in step S1601, the timer 1307 (Fig. 13) to begin time measurement. In step S1602 the system controller 1309 (Fig. 13) commands the focal evaluation value calculation area setup unit 1302 (Fig. 13) and divided area setup unit 1303 (Fig. 13) to set areas in the screen plane as shown in Fig. 4, for example. At step S1603 the system controller 1309 (Fig. 13) judges whether to stop the variable control of high-brightness pixel decision threshold. Details of step S1603 will be described later. In step S1604 variable control is applied to the high-brightness pixel decision threshold in case a decision result of step S1603 is "Don't Stop Control." In step S1605 the system controller 1309 (Fig. 13) commands in the case of the decision result of step S1603 is "Stop Control" the high-brightness pixel presence/absence checker 1304 (Fig. 13) to determine whether a high-brightness pixel is present or absent in each divided area by using the high-brightness pixel decision threshold. Subsequent processing operations are similar to those of corresponding steps in the procedure of Fig. 7.

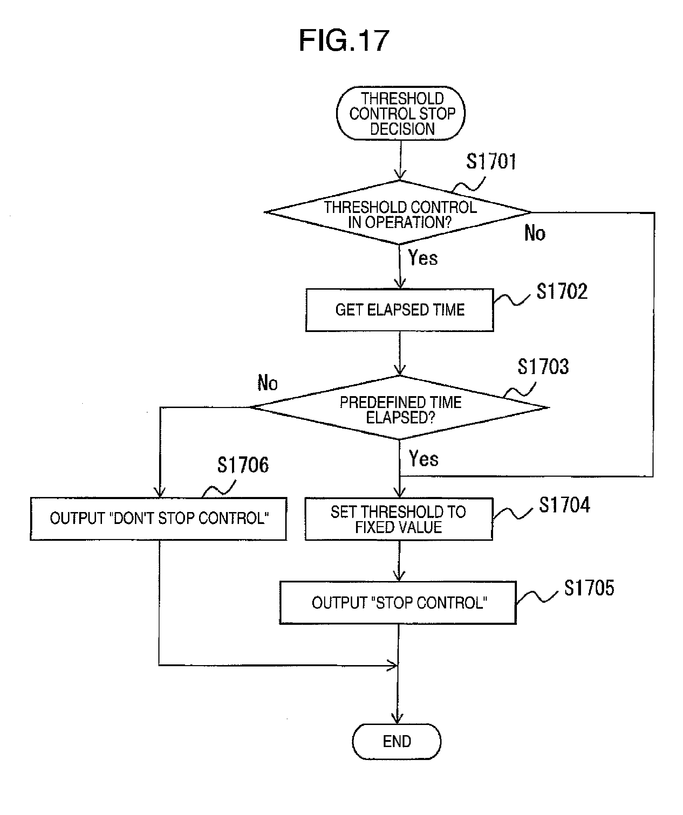

Fig. 17 is a diagram showing one example of a detailed flow of the threshold control stop decision processing of step S1603 of Fig. 16. In step S1701 the system controller 1309 (Fig. 13) determines whether the variable control of high-brightness pixel decision threshold is presently valid or not. If so then the procedure goes to step S 1702. If not, proceed to step S 1704. The decision as to whether the variable control is valid may be made using a flag indicative of the fact that the variable control is being performed. This flag is designed to become "1" upon startup of the variable control of high-brightness pixel decision threshold and becomes "0" upon interruption of it. In step S1702 the system controller 1309 (Fig. 13) gains from the timer 1307 (Fig. 13) the data indicating an elapsed time from AF control startup. At step S1703 the system controller 1309 (Fig. 13) determines whether the measured time obtained at step S1702 exceeds a predetermined value. If the former exceeds the latter then the routine goes to step S 1704. If not then a decision result of "Don't Stop Control" is output, followed by termination of the processing. The predetermined value as used herein may be a value stored in EEPROM or a fixed value. In step S1704 the system controller 1309 (Fig. 13) sets the high-brightness pixel decision threshold to a predefined value and then outputs a decision result of "Stop Control," followed by quittance of the processing. The predefined value as used herein may be a value stored in EEPROM or else; alternatively, a fixed value may be used. Still alternatively, the value calculated in the processing of step S 1704 may be set thereto. In the case of using the flag indicating that the variable control is being performed, this flag's value is set at "0."

With the above-stated processing, it is possible to deactivate the variable control when a predetermined length of time has elapsed since the startup of AF control. Accordingly, in a case where the unstableness of AF control is caused by the variable control of high-brightness pixel decision threshold, it is possible to solve problems in such case.

### (3-1) System Configuration of Embodiment 3

Here, an exemplary system configuration of high-accuracy AF control system capable of imaging scenes of the kind containing high-brightness shooting objects, such as spot light sources or else, will be explained with reference to Figs. 18-19.

Fig. 18 is a diagram showing an exemplary basic configuration of an imaging system in accordance with a further embodiment of this invention. This system has a device state detecting unit 1807 in place of the brightness distribution detector 107 of that shown in Fig. 1. Examples of the device state detector 1807 include, but not limited to, acceleration sensors and gyroscopic sensors. The device state detector 1807 is responsive to receipt of a command from a system control unit 1809, for detecting a current status of the device, such as its installation position, inclination, etc.

With such arrangement, it is possible to implement the following functionalities: the system controller 1809 detects a timing to activate the variable control of high-brightness pixel decision threshold using data from the device state detector 1807; a high-brightness pixel presence/absence check unit 1804 uses the high-brightness pixel decision threshold to determine one or more areas containing therein high-brightness pixels; and, a focal evaluation value calculator 1806 uses a determination result of unit 1804 to calculate a focal evaluation value after having excluded the high-brightness pixel-containing areas from focal evaluation value calculation area. Thus it is possible to set up the high-brightness pixel decision threshold in a way best suited for a target object in a scene with point light sources existing therein, by forcing the variable control of high-brightness pixel decision threshold to get started in response to a change of the object being imaged, which change is resulted from a change in installation position or inclination of the image signal processing apparatus. This makes it possible to realize AF functionality with increased accuracy.

### (3-2) Detecting Device State-Responsive Variable Threshold Control Stop Timing

A typical example of the timing to restart variable control of high-brightness pixel decision threshold from a state that the variable control is halted is an instant at which the imaging object exhibited a change. An explanation will here be given of the processing for detecting a change of the shooting object by using a device state detector, such as an accelerometer (g-sensor) or gyroscope, and for starting the variable control of high-brightness pixel decision threshold.

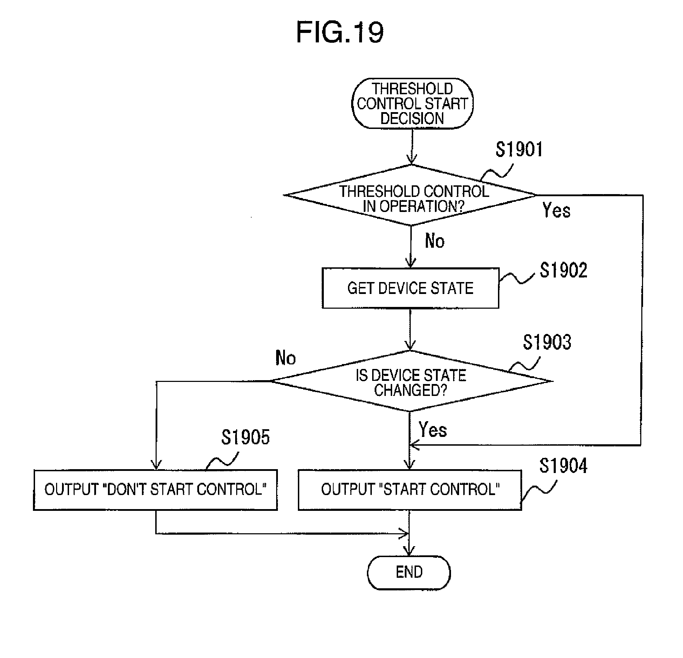

Fig. 19 is a diagram showing one example of a detailed flow of the threshold control start judging processing at step S702 in Fig. 7, at step S1202 of Fig. 12 or at step S 1403 of Fig. 14. In step S1901, the system controller 1809 (Fig. 18) determines whether the variable control of high-brightness pixel decision threshold is being presently performed. If the control is in operation, a judgment result of "Start Control" is output, followed by termination of the processing. In other cases, the procedure goes to step S1902. The judgment as to whether the variable control is in operation may be made using a flag indicating that the variable control is being done. This flag is becomes "1" upon startup of the variable control of high-brightness pixel decision threshold and becomes "0" upon interruption of it. In step S 1902 the system controller 1809 (Fig. 18) obtains from the device state detector 1807 (Fig. 18) the data indicative of a current brightness distribution. In step S 1903 the system controller 1809 (Fig. 18) determines whether the device state obtained at step S 1902 is a predefined device state. Practical examples of the predefined device state include a case where the g-sensor's evaluation value becomes greater than or equal to a fixed value. Detection of the g-sensor evaluation value being greater than or equal to the fixed value is considered to indicate that the imaging subject changed with motion of the device. It is thus needed to variably control the high-brightness pixel decision threshold; so, a decision of "Start Control" is made. In case the device state is judged not to be the predefined state at step S 1903, a judgment result of "Don't Start Control" is output, followed by termination of the processing. Note here that once after the variable control of high-brightness pixel decision threshold gets started, this control stays effective until it is stopped.

With the processing above, it is possible by detection of an imaging object change to restart the variable control of high-brightness pixel decision threshold from the state that the variable control is being stopped, thereby enabling achievement of AF with excellent accuracy.

### (4-1) System Configuration of Embodiment 4

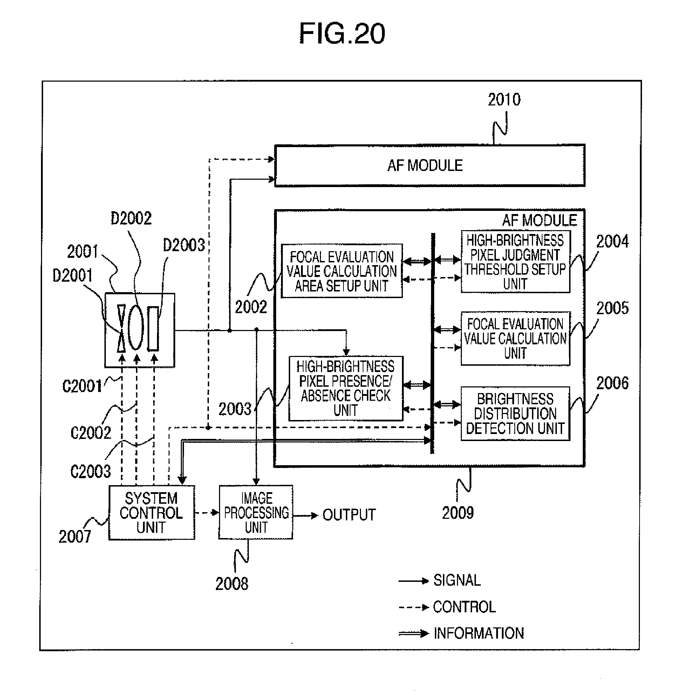

Here, an exemplary configuration of high-accuracy AF control system for use in scenes of the kind containing therein high-brightness shooting objects, such as spot light sources or else, in accordance with another further embodiment of this invention will be described with reference to Fig. 20.

Fig. 20 is a diagram showing one example of a fundamental configuration in Embodiment 4. This system configuration is similar to that shown in Fig. 1 with the divided area setup unit 103 being deleted therefrom: its other blocks are the same in function as corresponding ones of Fig. 1. A high-brightness pixel presence/absence check unit 2003 functions to determine whether the focal evaluation value calculation area contains a high-brightness pixel(s). A plurality of AF modules are equipped, each of which includes a focal evaluation value calculation area setup unit 2002, high-brightness pixel presence/absence checker 2003, high-brightness pixel decision threshold setup unit 2004, focal evaluation value calculator 2005 and brightness distribution detector 2006. Although the system shown in Fig. 20 has a couple of AF modules 2009 and 2010 which are functionally equivalent to each other, the system may be modified to have three or more AF modules.

With the above-stated arrangement, it is possible to achieve the following functionalities: the system controller 2007 commands the focal evaluation value calculation area setter of each AF module to set perform area setting; data from the brightness distribution detector 2006 is used to detect exact timings for start and stop of the variable control of high-brightness pixel decision threshold; the high-brightness pixel presence/absence checker 2003 uses this high-brightness pixel decision threshold to determine whether each focal evaluation value calculation area contains one or more high-brightness pixels; and, the focal evaluation value calculator 2005 uses this determination result to calculate the focal evaluation value required.

Thus it is possible, with the system configuration different from that shown in Fig. 1, to realize high-accuracy AF control device and method without incurring the risk of the lens control's becoming unstable due to a careless change in high-brightness pixel decision threshold while at the same time lowering the processing load in scenes of the kind containing point light sources.

It should be noted that this invention is not limited only to the above-stated illustrative embodiments, and various modifications and alterations may be involved therein. For instance, the embodiments are for the purpose of detailed explanation of the invention in an easy-to-understand way and should not necessarily be limited to those having all of the constituent parts or components stated supra. Also note that the configuration of one embodiment is at least partially replaceable with the configuration of another embodiment; the configuration of an embodiment may also be added the configuration of another embodiment. The configuration of each embodiment is partly modifiable to undergo addition, deletion or replacement of another configuration.

The above-stated individual configuration is such that its part or entirety may be constituted from hardware components or, alternatively, realized by software programs running on a central processor unit (CPU). As for control lines and data transmission lines, only those lines are shown in the drawings, which are considered to be necessary for explanation purposes: all of the control and data lines used in products are not necessarily shown therein. It may also be considered that in reality, almost all configurations are interconnected together.

It should be further understood by those skilled in the art that although the foregoing description has been made on embodiments of the invention, the invention is not limited thereto and various changes and modifications may be made without departing from the the scope of the appended claims, as interpreted in light of the description and drawings.

## Claims

1. An image signal processing apparatus comprising:
imaging unit (101, 1301, 1801, 2001) having a focus lens (D102, D1302, D1802, D2002), wherein the imaging unit outputs an image signal;
autofocus unit (110, 2009, 2010) including a determination unit (102, 103; 1302, 1303; 1802, 1803; 2002) which determines an area (503) having a brightness being greater than or equal to a preset threshold by extraction from within a focal evaluation value calculation area (402, 501) to be applied to calculation of a focal evaluation value used to move the focus lens to an in-focus point, and a focal evaluation value calculation unit (106, 1306, 1806, 2005) which calculates the focal evaluation value by excluding from the focal evaluation value calculation area (402, 501) said area (503) extracted by the determination unit and having a brightness greater than or equal to the preset threshold; and
a system control unit (109, 1309, 1809, 2007) which performs autofocus control in such a way as to achieve focus based on the focal evaluation value calculated by the focal evaluation value calculation unit (106, 1306, 1806, 2005) of said autofocus unit (110,2009,2010),
**characterized in that**:
the image signal processing apparatus comprises a threshold setup unit (105, 1305, 1805, 2004) which sets up the threshold used in said determination unit, wherein said threshold setup unit (105, 1305, 1805, 2004) variably sets an appropriate high-brightness pixel decision threshold value,
a situation of start of variable control of the threshold is as follows:
the variable control of the threshold gets started in response to detection that an object being imaged is changed, or
said autofocus unit (110, 2009, 2010) further includes a brightness distribution detection unit (107, 2006) which detects a brightness distribution of an image signal to be output from said imaging unit (101, 1301, 1801, 2001), and the variable control of the threshold gets started in response to detection by the brightness distribution detection unit revealing that the brightness distribution becomes identical to a predetermined brightness distribution, or
the variable control of the threshold gets started after elapse of a prespecified length of time since start-up of the autofocus control, or
the image signal processing apparatus further comprises a device status detection unit (1807) which detects a change in at least one of an installation position and installation direction of the image signal processing apparatus, and the variable control of the threshold gets started in response to detection of a change in at least one of the installation position and installation direction of the image signal processing apparatus by the device status detection unit (1807);
a situation of stop of variable control of the threshold is as follows:
the variable control of the threshold is stopped upon judgment of in-focus achievement, or
said autofocus unit (110, 2009, 2010) further includes a brightness distribution detection unit (107, 2006) which detects a brightness distribution of an image signal to be output from said imaging unit (101, 1301, 1801, 2001), and wherein the variable control of the threshold is stopped in response to detection by the brightness distribution detection unit revealing that the brightness distribution becomes identical to a predetermined brightness distribution, or
the variable control of the threshold is stopped after elapse of a prespecified length of time since startup of the autofocus control,
wherein, when said system control unit (109, 1309, 1809, 2007) detects that an object being imaged is changed, said system control unit (109, 1309, 1809, 2007) performs autofocus control based on the focal evaluation value that is variable depending on situations of start and stop of variable control of the threshold defined by said threshold setup unit (105, 1305, 1805, 2004).

2. The image signal processing apparatus according to claim 1, wherein said autofocus unit (110) further includes a target area setup unit (102, 1302, 1802) which sets the focal evaluation value calculation area (402, 501) to be applied to calculation of the focal evaluation value and a divided area setup unit (103, 1303, 1803) which divides the focal evaluation value calculation area as set by the target area setup unit to thereby define a plurality of divided areas (403), and wherein the area to be excluded from the focal evaluation value calculation area is in units of such divided areas.

3. An image signal processing method using an image signal processing apparatus having an image pickup element (D103, D1303, D1803, D2003) and a focus lens (D102, D1302, D1802, D2002), said method comprising:
an imaging step of photoelectrically converting incident light from an object being imaged and for outputting it as an image signal;
a focal evaluation value calculation area setup step of setting a focal evaluation value calculation area (402, 501) to be subjected to calculation of a focal evaluation value used to move the focus lens (D102, D1302, D1802, D2002) to an in-focus point;
a high-brightness pixel presence/absence check step of checking the focal evaluation value calculation area defined at the focal evaluation value calculation area setup step to determine whether one or more high-brightness pixels (502) are contained therein;
a focal evaluation value calculation step of calculating the focal evaluation value after having excluded from the focal evaluation value calculation area (402, 501) an area (503) which was determined to contain therein one or more high-brightness pixels at the high-brightness pixel presence/absence check step;
an autofocus control start step of starting autofocus control upon occurrence of detection that an object being imaged is changed; and
a focus lens moving step of moving the focus lens (D102, D1302, D1802, D2002) to an in-focus point by using the focal evaluation value computed in the focal evaluation value calculation step,
**characterized in that**:
the method comprises a high-brightness pixel judgment threshold setup step of setting a threshold for use in the high-brightness pixel presence/absence check step, wherein the high-brightness pixel judgment threshold setup step comprises variably setting an appropriate high-brightness pixel decision threshold value;
at the high-brightness pixel judgment threshold setup step, variable control of the high-brightness pixel judgment threshold gets started at a first prespecified timing, wherein:
the first prespecified timing is a time point at which it is detected that the object being imaged is changed, or
the first prespecified timing is a time point at which it is detected that the object being imaged has a predetermined brightness distribution, or
the first prespecified timing is a time point at which a predetermined length of time has elapsed since startup of the autofocus control, or
the method further comprises a device state detection step of detecting a change of at least one of an installation position and an installation direction of the image signal processing apparatus, and the first prespecified timing is an instant whereat a change of at least one of the installation position and installation direction of the image signal processing apparatus is detected,
control is provided in the focus lens moving step of moving the focus lens (D102, D 1302, D 1802, D2002) to its in-focus point by using the focal evaluation value and
at the high-brightness pixel judgment threshold setup step, the variable control of the high-brightness pixel judgment threshold is controlled to stop at a second prespecified timing, wherein:
the second prespecified timing is a time point of judgment of in-focus achievement, or
the second prespecified timing is a time point at which it is detected that the object being imaged has a predetermined brightness distribution, or
the second prespecified timing is a time point at which a predetermined length of time has elapsed since startup of the autofocus control.

4. An image signal processing method using an image signal processing apparatus having an image pickup element (D103, D 1303, D 1803, D2003) and a focus lens (D102, D 1302, D 1802, D2002), said method comprising:
an imaging step of photoelectrically converting incident light from an object being imaged and for outputting it as an image signal;
a focal evaluation value calculation area setup step of setting an area (402, 501) to be subjected to calculation of a focal evaluation value used to move the focus lens (D102, D 1302, D 1802, D2002) to an in-focus point;
a divided area setup step of setting a given number of divided areas (403) with given sizes at given positions in said focal evaluation value calculation area defined at the focal evaluation value calculation area setup step;
a high-brightness pixel presence/absence check step of checking each of the divided areas (403) defined at the divided area setup step to determine whether one or more high-brightness pixels (502) are contained therein;
a focal evaluation value calculation step of calculating the focal evaluation value after having excluded from the focal evaluation value calculation area (501) the divided areas (503) which were determined to contain therein one or more high-brightness pixels (502) at the high-brightness pixel presence/absence check step;
an autofocus control start step of starting autofocus control upon occurrence of detection that an object being imaged is changed; and
a focus lens moving step of moving the focus lens (D102, D 1302, D 1802, D2002) to an in-focus point by using the focal evaluation value computed in the focal evaluation value calculation step,
**characterized in that**:
the method comprises a high-brightness pixel judgment threshold setup step of setting a threshold for use in the high-brightness pixel presence/absence check step, wherein the high-brightness pixel judgment threshold setup step comprises variably setting an appropriate high-brightness pixel decision threshold value;
at the high-brightness pixel judgment threshold setup step, variable control of the high-brightness pixel judgment threshold gets started at a first prespecified timing, wherein:
the first prespecified timing is a time point at which it is detected that the object being imaged is changed, or
the first prespecified timing is a time point at which it is detected that the object being imaged has a predetermined brightness distribution, or
the first prespecified timing is a time point at which a predetermined length of time has elapsed since startup of the autofocus control, or
the method further comprises a device state detection step of detecting a change of at least one of an installation position and an installation direction of the image signal processing apparatus, and the first prespecified timing is an instant whereat a change of at least one of the installation position and installation direction of the image signal processing apparatus is detected,
control is provided in the focus lens moving step of moving the focus lens (D102, D 1302, D 1802, D2002) to its in-focus point by using the focal evaluation value, and
at the high-brightness pixel judgment threshold setup step, the variable control of the high-brightness pixel judgment threshold is controlled to stop at a second prespecified timing, wherein:
the second prespecified timing is a time point of judgment of in-focus achievement, or
the second prespecified timing is a time point at which it is detected that the object being imaged has a predetermined brightness distribution, or
the second prespecified timing is a time point at which a predetermined length of time has elapsed since startup of the autofocus control.

## Patentansprüche

1. Bildsignalverarbeitungsvorrichtung, die Folgendes umfasst:
eine Bilderzeugungseinheit (101, 1301, 1801, 2001) mit einer Fokuslinse (D102, D1302, D1802, D2002), wobei die Bilderzeugungseinheit ein Bildsignal ausgibt;
eine Autofokuseinheit (110, 2009, 2010), die eine Bestimmungseinheit (102, 103; 1302, 1303; 1802, 1803; 2002) umfasst, die einen Bereich (503), dessen Helligkeit einem voreingestellten Grenzwert entspricht oder höher ist, durch das Extrahieren aus einem Fokusermittlungswertberechnungsbereich (402, 501) bestimmt zur Verwendung für die Berechnung eines Fokusermittlungswerts, der verwendet wird, um die Linse an einen scharfen Punkt zu bewegen; und
eine Fokusermittlungswertberechnungseinheit (106, 1306, 1806, 2005), die den Fokusermittlungswert durch das Ausschließen jenes Bereichs (503), der durch die Bestimmungseinheit extrahiert wurde und eine Helligkeit aufweist, die einem voreingestellten Grenzwert entspricht oder höher ist, aus dem Fokusermittlungswertberechnungsbereich (402, 501) berechnet; und
eine Systemsteuerungseinheit (109, 1309, 1809, 2007), die eine Autofokussteuerung so durchführt, dass ein Fokus auf Grundlage des durch die Fokusermittlungswertberechnungseinheit (106, 1306, 1806, 2005) der Autofokuseinheit (110, 2009, 2010) berechneten Fokusermittlungswerts erzielt wird,
**dadurch gekennzeichnet, dass**:
die Bildsignalverarbeitungsvorrichtung eine Grenzwertfestlegungseinheit (105, 1305, 1805, 2004) umfasst, die den in der Bestimmungseinheit verwendeten Grenzwert festlegt, wobei die Grenzwertfestlegungseinheit (105, 1305, 1805, 2004) einen geeigneten Grenzwert für die Entscheidung bezüglich des Vorliegens von Pixeln mit hoher Helligkeit variabel festlegt,
eine Ausgangssituation der variablen Steuerung des Grenzwerts wie folgt aussieht:
die variable Steuerung des Grenzwerts wird als Antwort auf die Detektion einer Veränderung eines abgebildeten Objekts gestartet oder
die Autofokuseinheit (110, 2009, 2010) umfasst ferner eine Helligkeitsverteilungsdetektionseinheit (107, 2006), die die Helligkeitsverteilung eines Bildsignals, das durch die Bilderzeugungseinheit (101, 1301, 1801, 2001) ausgegeben werden soll, detektiert, und die variable Steuerung des Grenzwerts wird als Antwort darauf gestartet, dass die Helligkeitsverteilungsdetektionseinheit detektiert, dass die Helligkeitsverteilung einer vorbestimmten Helligkeitsverteilung entspricht, oder
die variable Steuerung des Grenzwerts wird gestartet, nachdem eine vorbestimmte Zeit seit dem Einschalten der Autofokussteuerung vergangen ist, oder
die Bildsignalverarbeitungsvorrichtung umfasst ferner eine Vorrichtungsstatusdetektionseinheit (1807), die eine Veränderung in Bezug auf Einrichtungsposition und/oder Einrichtungsrichtung der Bildsignalverarbeitungsvorrichtung detektiert, und die variable Steuerung des Grenzwerts wird als Antwort auf die Detektion einer Veränderung in Bezug auf Einrichtungsposition und/oder Einrichtungsrichtung der Bildsignalverarbeitungsvorrichtung durch die Vorrichtungsstatusdetektionseinheit (1807) gestartet;
eine Situation, in der die variable Steuerung des Grenzwerts gestoppt wird, wie folgt aussieht:
die variable Steuerung des Grenzwerts wird bei Vorliegen einer Beurteilung, dass Schärfe erreicht wurde, gestoppt; oder
die Autofokuseinheit (110, 2009, 2010) umfasst ferner eine Helligkeitsverteilungsdetektionseinheit (107, 2006), die die Helligkeitsverteilung eines Bildsignals, das durch die Bilderzeugungseinheit (101, 1301, 1801, 2001) ausgegeben werden soll, detektiert, und die variable Steuerung des Grenzwerts wird als Antwort darauf gestoppt, dass die Helligkeitsverteilungsdetektionseinheit detektiert, dass die Helligkeitsverteilung einer vorbestimmten Helligkeitsverteilung entspricht, oder
die variable Steuerung des Grenzwerts wird gestoppt, nachdem eine vorbestimmte Zeit seit dem Einschalten der Autofokussteuerung vergangen ist,
wobei, wenn die Systemsteuerungseinheit (109, 1309, 1809, 2007) eine Veränderung eines Objekts, das abgebildet wird, detektiert, die Systemsteuerungseinheit (109, 1309, 1809, 2007) eine Autofokussteuerung auf Grundlage des Fokusermittlungswerts durchführt, der in Abhängigkeit von den Start- und Stopp-Situationen der variablen Steuerung des durch die Grenzwertfestlegungseinheit (105, 1305, 1805, 2004) definierten Grenzwerts variabel ist.

2. Bildsignalverarbeitungsvorrichtung nach Anspruch 1, worin die Autofokuseinheit (110) ferner eine Zielbereichfestlegungseinheit (102, 1302, 1802) umfasst, die den Fokusermittlungswertberechnungsbereich (402, 501) festlegt, der für die Berechnung des Fokusermittlungswerts herangezogen wird, und eine Einheit zur Festlegung eines geteilten Bereichs (103, 1303, 1803), die den Fokusermittlungswertberechnungsbereich wie durch die Zielbereichfestlegungseinheit festgelegt teilt, um dadurch eine Vielzahl geteilter Bereiche (403) zu definieren, und worin der aus dem Fokusermittlungswertberechnungsbereich auszuschließende Bereich in Einheiten solcher geteilter Bereiche vorliegt.

3. Bildsignalverarbeitungsverfahren unter Verwendung einer Bildsignalverarbeitungsvorrichtung mit einem Bildabtastelement (D103, D1303, D1803, D2003) und einer Fokuslinse (D102, D1302, D1802, D2002), wobei das Verfahren Folgendes umfasst:
einen Bilderzeugungsschritt, bei dem einfallendes Licht von einem Objekt, das abgebildet wird, photoelektrisch umgewandelt wird, um es als Bildsignal auszugeben;
einen Fokusermittlungswertberechnungsbereichfestlegungsschritt, bei dem ein Fokusermittlungswertberechnungsbereich (402, 501) festgelegt wird, der der Berechnung eines Fokusermittlungswerts unterzogen werden soll, der verwendet wird, um die Fokuslinse (D102, D1302, D1802, D2002) an einen scharfen Punkt zu bewegen;
einen Schritt zur Überprüfung des Vorliegens/Nicht-Vorliegens von Pixeln mit hoher Helligkeit, bei dem der Fokusermittlungswertberechnungsbereich, der in dem Fokusermittlungswertberechnungsbereichfestlegungsschritt festgelegt wurde, überprüft wird, um zu bestimmen, ob ein oder mehrere Pixel mit hoher Helligkeit (502) in dem Bereich enthalten sind;
ein Fokusermittlungswertberechnungsschritt zur Berechnung des Fokusermittlungswerts nach Ausschließen eines Bereichs (503), von dem in dem Schritt zur Überprüfung des Vorliegens/Nicht-Vorliegens von Pixeln mit hoher Helligkeit festgestellt wurde, dass er ein oder mehrere Pixel mit hoher Helligkeit enthält, aus dem Fokusermittlungswertberechnungsbereich (402, 501);
einen Autofokussteuerungsstartschritt zum Starten der Autofokussteuerung, wenn eine Veränderung eines Objekts, das abgebildet werden soll, detektiert wird; und
einen Fokuslinsenbewegungsschritt zur Bewegung der Fokuslinse (D102, D1302, D1802, D2002) auf einen scharfen Punkt unter Verwendung des in dem Fokusermittlungswertberechnungsschritt berechneten Fokusermittlungswerts,
**dadurch gekennzeichnet, dass**:
das Verfahren einen Schritt zur Festlegung eines Grenzwerts für die Beurteilung von Pixeln mit hoher Helligkeit umfasst, bei dem ein Grenzwert zur Verwendung in dem Schritt zur Überprüfung des Vorliegens/Nicht-Vorliegens von Pixeln mit hoher Helligkeit festgelegt wird, wobei der Schritt zur Festlegung eines Grenzwerts für die Beurteilung von Pixeln mit hoher Helligkeit das variable Festlegen eines geeigneten Grenzwerts für die Entscheidung bezüglich des Vorliegens von Pixeln mit hoher Helligkeit umfasst;
in dem Schritt zur Festlegung eines Grenzwerts für die Beurteilung von Pixeln mit hoher Helligkeit die variable Steuerung des Grenzwerts für die Entscheidung bezüglich des Vorliegens von Pixeln mit hoher Helligkeit zu einem ersten vorbestimmten Zeitpunkt gestartet wird, wobei:
der erste vorbestimmte Zeitpunkt ein Zeitpunkt ist, zu dem eine Veränderung des abzubildenden Objekts detektiert wird;
der erste vorbestimmte Zeitpunkt ein Zeitpunkt ist, zu dem detektiert wird, dass das abzubildende Objekt eine vorbestimmte Helligkeitsverteilung aufweist; oder
der erste vorbestimmte Zeitpunkt ein Zeitpunkt ist, zu dem eine vorbestimmte Zeit seit dem Einschalten der Autofokussteuerung vergangen ist; oder
das Verfahren weiters einen Vorrichtungsstatusdetektionsschritt zur Detektion einer Veränderung in Bezug auf Einrichtungsposition und/oder Einrichtungsrichtung der Bildsignalverarbeitungsvorrichtung detektiert, und der erste vorbestimmte Zeitpunkt ein Zeitpunkt ist, zu dem eine Veränderung in Bezug auf Einrichtungsposition und/oder Einrichtungsrichtung der Bildsignalverarbeitungsvorrichtung detektiert wird,
Steuerung in dem Fokuslinsenbewegungsschritt zur Bewegung der Fokuslinse (D102, D1302, D1802, D2002) zu ihrem scharfen Punkt unter Verwendung des Fokusermittlungswerts bereitgestellt ist, und
bei dem Schritt zur Festlegung eines Grenzwerts für die Beurteilung von Pixeln mit hoher Helligkeit die variable Steuerung des Grenzwerts für die Entscheidung bezüglich des Vorliegens von Pixeln mit hoher Helligkeit gesteuert wird, um zu einem zweiten vorbestimmten Zeitpunkt zu stoppen, worin:
der zweite vorbestimmte Zeitpunkt ein Zeitpunkt ist, zu dem eine Beurteilung vorliegt, dass Schärfe erreicht ist, oder
der zweite vorbestimmte Zeitpunkt ein Zeitpunkt ist, zu dem das abgebildete Objekt eine vorbestimmte Helligkeitsverteilung aufweist, oder
der zweite vorbestimmte Zeitpunkt ein Zeitpunkt ist, zu dem eine vorbestimmte Zeit seit Einschalten der Autofokussteuerung vergangen ist.

4. Bildsignalverarbeitungsverfahren unter Verwendung einer Bildsignalverarbeitungsvorrichtung mit einem Bildabtastelement (D103, D1303, D1803, D2003) und einer Fokuslinse (D102, D1302, D1802, D2002), wobei das Verfahren Folgendes umfasst:
einen Bilderzeugungsschritt, bei dem einfallendes Licht von einem Objekt, das abgebildet wird, photoelektrisch umgewandelt wird, um es als Bildsignal auszugeben;
einen Fokusermittlungswertberechnungsbereichfestlegungsschritt, bei dem ein Fokusermittlungswertberechnungsbereich (402, 501) festgelegt wird, der der Berechnung eines Fokusermittlungswerts unterzogen werden soll, der verwendet wird, um die Fokuslinse (D102, D1302, D1802, D2002) an einen scharfen Punkt zu bewegen;
einen Schritt zur Festlegung geteilter Bereiche zur Festlegung einer bestimmten Anzahl geteilter Bereiche (403) mit bestimmten Größen an bestimmten Positionen in dem Fokusermittlungswertberechnungsbereich, der in dem Fokusermittlungswertberechnungsbereichfestlegungsschritt festgelegt wurde;
einen Schritt zur Überprüfung des Vorliegens/Nicht-Vorliegens von Pixeln mit hoher Helligkeit, bei dem jeder der geteilten Bereiche, die in dem Schritt zur Festlegung geteilter Bereiche definiert wurden, überprüft wird, um zu bestimmen, ob ein oder mehrere Pixel mit hoher Helligkeit (502) in dem Bereich enthalten sind;
ein Fokusermittlungswertberechnungsschritt zur Berechnung des Fokusermittlungswerts nach Ausschließen der geteilten Bereiche (503), von denen in dem Schritt zur Überprüfung des Vorliegens/Nicht-Vorliegens von Pixeln mit hoher Helligkeit festgestellt wurde, dass sie ein oder mehrere Pixel mit hoher Helligkeit (502) enthalten, aus dem Fokusermittlungswertberechnungsbereich (501);
einen Autofokussteuerungsstartschritt zum Starten der Autofokussteuerung, wenn eine Veränderung eines Objekts, das abgebildet werden soll, detektiert wird; und
einen Fokuslinsenbewegungsschritt zur Bewegung der Fokuslinse (D102, D1302, D1802, D2002) auf einen scharfen Punkt unter Verwendung des in dem Fokusermittlungswertberechnungsschritt berechneten Fokusermittlungswerts,
**dadurch gekennzeichnet, dass**:
das Verfahren einen Schritt zur Festlegung eines Grenzwerts für die Beurteilung von Pixeln mit hoher Helligkeit umfasst, bei dem ein Grenzwert zur Verwendung in dem Schritt zur Überprüfung des Vorliegens/Nicht-Vorliegens von Pixeln mit hoher Helligkeit festgelegt wird, wobei der Schritt zur Festlegung eines Grenzwerts für die Beurteilung von Pixeln mit hoher Helligkeit das variable Festlegen eines geeigneten Grenzwerts für die Entscheidung bezüglich des Vorliegens von Pixeln mit hoher Helligkeit umfasst;
in dem Schritt zur Festlegung eines Grenzwerts für die Beurteilung von Pixeln mit hoher Helligkeit die variable Steuerung des Grenzwerts für die Entscheidung bezüglich des Vorliegens von Pixeln mit hoher Helligkeit zu einem ersten vorbestimmten Zeitpunkt gestartet wird, wobei:
der erste vorbestimmte Zeitpunkt ein Zeitpunkt ist, zu dem eine Veränderung des abzubildenden Objekts detektiert wird;
der erste vorbestimmte Zeitpunkt ein Zeitpunkt ist, zu dem detektiert wird, dass das abzubildende Objekt eine vorbestimmte Helligkeitsverteilung aufweist; oder
der erste vorbestimmte Zeitpunkt ein Zeitpunkt ist, zu dem eine vorbestimmte Zeit seit dem Einschalten der Autofokussteuerung vergangen ist; oder
das Verfahren weiters einen Vorrichtungsstatusdetektionsschritt zur Detektion einer Veränderung in Bezug auf Einrichtungsposition und/oder Einrichtungsrichtung der Bildsignalverarbeitungsvorrichtung detektiert, und der erste vorbestimmte Zeitpunkt ein Zeitpunkt ist, zu dem eine Veränderung in Bezug auf Einrichtungsposition und/oder Einrichtungsrichtung der Bildsignalverarbeitungsvorrichtung detektiert wird,
Steuerung in dem Fokuslinsenbewegungsschritt zur Bewegung der Fokuslinse (D102, D1302, D1802, D2002) zu ihrem scharfen Punkt unter Verwendung des Fokusermittlungswerts bereitgestellt ist, und
bei dem Schritt zur Festlegung eines Grenzwerts für die Beurteilung von Pixeln mit hoher Helligkeit die variable Steuerung des Grenzwerts für die Entscheidung bezüglich des Vorliegens von Pixeln mit hoher Helligkeit gesteuert wird, um zu einem zweiten vorbestimmten Zeitpunkt zu stoppen, worin:
der zweite vorbestimmte Zeitpunkt ein Zeitpunkt ist, zu dem eine Beurteilung vorliegt, dass Schärfe erreicht ist, oder
der zweite vorbestimmte Zeitpunkt ein Zeitpunkt ist, zu dem das abgebildete Objekt eine vorbestimmte Helligkeitsverteilung aufweist, oder
der zweite vorbestimmte Zeitpunkt ein Zeitpunkt ist, zu dem eine vorbestimmte Zeit seit Einschalten der Autofokussteuerung vergangen ist.

## Revendications

1. Appareil de traitement de signal d'image comprenant:
une unité de formation d'image (101, 1301, 1801, 2001) comportant un objectif de mise au point (D102, D1302, D1802, D2002), dans lequel l'unité de formation d'image délivre un signal d'image ;
une unité de mise au point automatique (110, 2009, 2010) comprenant une unité de détermination (102, 103 ; 1302, 1303 ; 1802, 1803 ; 2002) qui détermine une zone (503) ayant une luminosité qui est supérieure ou égale à un seuil présélectionné par l'extraction d'une zone de calcul de valeur d'évaluation de focale (402, 501) à appliquer au calcul d'une valeur d'évaluation de focale utilisée pour déplacer l'objectif de mise au point vers un point de mise au point, et une unité de calcul de valeur d'évaluation de focale (106, 1306, 1806, 2005) qui calcule la valeur d'évaluation de focale en excluant, de la zone de calcul de valeur d'évaluation de focale (402, 501), ladite zone (503) extraite par l'unité de détermination et ayant une luminosité supérieure ou égale au seuil présélectionné ; et
une unité de commande de système (109, 1309, 1809, 2007) qui effectue une commande de mise au point automatique de manière à effectuer une mise au point sur la base de la valeur d'évaluation de focale calculée par l'unité de calcul de valeur d'évaluation de focale (106, 1306, 1806, 2005) de ladite unité de mise au point automatique (110, 2009, 2010),
**caractérisé en ce que** :
l'appareil de traitement de signal d'image comprend une unité d'établissement de seuil (105, 1305, 1805, 2004) qui établit le seuil utilisé dans ladite unité de détermination, dans lequel ladite unité d'établissement de seuil (105, 1305, 1805, 2004) établit de manière variable une valeur de seuil de décision de pixel de haute luminosité appropriée,
une situation de début de commande variable du seuil est comme suit :
la commande variable du seuil est débutée en réponse à la détection qu'un objet dont l'image est formée a changé, ou
ladite unité de mise au point automatique (110, 2009, 2010) comprend en outre une unité de détection de distribution de luminosité (107, 2006) qui détecte une distribution de luminosité d'un signal d'image à délivrer par ladite unité de formation d'image (101, 1301, 1801, 2001), et la commande variable du seuil est débutée en réponse au fait que la détection par l'unité de détection de distribution de luminosité montre que la distribution de luminosité devient identique à une distribution de luminosité prédéterminée, ou
la commande variable du seuil est débutée après qu'une période de temps spécifiée au préalable s'est écoulée depuis le début de la commande de mise au point automatique, ou
l'appareil de traitement de signal d'image comprend en outre une unité de détection d'état de dispositif (1807) qui détecte un changement d'au moins l'une d'une position d'installation et d'une direction d'installation de l'appareil de traitement de signal d'image, et la commande variable du seuil est débutée en réponse à la détection d'un changement d'au moins l'une de la position d'installation et de la direction d'installation de l'appareil de traitement de signal d'image par l'unité de détection d'état de dispositif (1807) ;
une situation d'arrêt de commande variable du seuil est comme suit :
la commande variable du seuil est arrêtée lors du jugement que la mise au point est obtenue, ou
ladite unité de mise au point automatique (110, 2009, 2010) comprend en outre une unité de détection de distribution de luminosité (107, 2006) qui détecte une distribution de luminosité d'un signal d'image à délivrer par ladite unité de formation d'image (101, 1301, 1801, 2001), et dans lequel la commande variable du seuil est arrêtée en réponse au fait que la détection, par l'unité de détection de distribution de luminosité, montre que la distribution de luminosité devient identique à une distribution de luminosité prédéterminée, ou
la commande variable du seuil est arrêtée après qu'une période de temps spécifiée au préalable s'est écoulée depuis le début de la commande de mise au point automatique,
dans lequel, lorsque ladite unité de commande de système (109, 1309, 1809, 2007) détecte qu'un objet dont l'image est formée a changé, ladite unité de commande de système (109, 1309, 1809, 2007) effectue une commande de mise au point automatique sur la base de la valeur d'évaluation de focale qui varie en fonction des situations de début et d'arrêt de commande variable du seuil défini par ladite unité d'établissement de seuil (105, 1305, 1805, 2004).

2. Appareil de traitement de signal d'image selon la revendication 1, dans lequel ladite unité de mise au point automatique (110) comprend en outre une unité d'établissement de zone cible (102, 1302, 1802) qui établit la zone de calcul de valeur d'évaluation de focale (402, 501) à appliquer au calcul de la valeur d'évaluation de focale et une unité d'établissement de zones divisées (103, 1303, 1803) qui divise la zone de calcul de valeur d'évaluation de focale telle que définie par l'unité d'établissement de zone cible pour, de ce fait, définir une pluralité de zones divisées (403), et dans lequel la zone à exclure de la zone de calcul de valeur d'évaluation de focale est en unités de ces zones divisées.

3. Procédé de traitement de signal d'image en utilisant un appareil de traitement de signal d'image comportant un élément de prise d'image (D103, D1303, D1803, D2003) et un objectif de mise au point (D102, D1302, D1802, D2002), ledit procédé comprenant :
une étape de formation d'image pour convertir photoélectriquement une lumière incidente provenant d'un objet dont l'image est formée et pour la délivrer en tant que signal d'image ;
une étape d'établissement de zone de calcul de valeur d'évaluation de focale pour établir une zone de calcul de valeur d'évaluation de focale (402, 501) à soumettre au calcul d'une valeur d'évaluation de focale utilisée pour déplacer l'objectif de mise au point (D102, D1302, D1802, D2002) vers un point de mise au point ;
une étape de vérification de présence/absence de pixel de haute luminosité pour vérifier la zone de calcul de valeur d'évaluation de focale définie à l'étape d'établissement de zone de calcul de valeur d'évaluation de focale pour déterminer si un ou plusieurs pixels de haute luminosité (502) sont contenus dans celle-ci ;
une étape de calcul de valeur d'évaluation de focale pour calculer la valeur d'évaluation de focale après l'exclusion, de la zone de calcul de valeur d'évaluation de focale (402, 501), d'une zone (503) qui a été déterminée comme contenant dans celle-ci un ou plusieurs pixels de haute luminosité à l'étape de vérification de présence/absence de pixel de haute luminosité ;
une étape de début de commande de mise au point automatique pour débuter une commande de mise au point automatique lors de la détection qu'un objet dont l'image est formée a changé ;
une étape de déplacement d'objectif de mise au point pour déplacer l'objectif de mise au point (D102, D1302, D1802, D2002) vers un point de mise au point en utilisant la valeur d'évaluation de focale calculée à l'étape de calcul de valeur d'évaluation de focale ;
**caractérisé en ce que** :
le procédé comprend une étape d'établissement de seuil de jugement de pixel de haute luminosité pour établir un seuil destiné à être utilisé à l'étape de vérification de présence/absence de pixel de haute luminosité, dans lequel l'étape d'établissement de seuil de jugement de pixel de haute luminosité comprend l'établissement de manière variable d'une valeur de seuil de décision de pixel de haute luminosité appropriée ;
à l'étape d'établissement de seuil de jugement de pixel de haute luminosité, une commande variable du seuil de jugement de pixel de haute luminosité est débutée selon une première synchronisation spécifiée au préalable, dans lequel :
la première synchronisation spécifiée au préalable correspond à un instant auquel il est détecté que l'objet dont l'image est formée a changé, ou
la première synchronisation spécifiée au préalable correspond à un instant auquel il est détecté que l'objet dont l'image est formée a une distribution de luminosité prédéterminée, ou
la première synchronisation spécifiée au préalable correspond à un instant auquel une période de temps prédéterminée s'est écoulée depuis le début de la commande de mise au point automatique, ou
le procédé comprend en outre une étape de détection d'état de dispositif pour détecter un changement d'au moins l'une d'une position d'installation et d'une direction d'installation de l'appareil de traitement de signal d'image, et la première synchronisation spécifiée au préalable correspond à un instant auquel un changement d'au moins l'une de la position d'installation et de la direction d'installation de l'appareil de traitement de signal d'image est détecté,
la commande est effectuée à l'étape de déplacement d'objectif de mise au point pour déplacer l'objectif de mise au point (D102, D1302, D1802, D2002) vers son point de mise au point en utilisant la valeur d'évaluation de focale, et
à l'étape d'établissement de seuil de jugement de pixel de haute luminosité, l'arrêt de la commande variable du seuil de jugement de pixel de haute luminosité est commandé selon une deuxième synchronisation spécifiée au préalable, dans lequel :
la deuxième synchronisation spécifiée au préalable correspond à un instant de jugement que la mise au point est obtenue, ou
la deuxième synchronisation spécifiée au préalable correspond à un instant auquel il est détecté que l'objet dont l'image est formée a une distribution de luminosité prédéterminée, ou
la deuxième synchronisation spécifiée au préalable correspond à un instant auquel une période de temps prédéterminée s'est écoulée depuis le début de la commande de mise au point automatique.

4. Procédé de traitement de signal d'image en utilisant un appareil de traitement de signal d'image comportant un élément de prise d'image (D103, D1303, D1803, D2003) et un objectif de mise au point (D102, D1302, D1802, D2002), ledit procédé comprenant :
une étape de formation d'image pour convertir photoélectriquement une lumière incidente provenant d'un objet dont l'image est formée et pour la délivrer en tant que signal d'image ;
une étape d'établissement de zone de calcul de valeur d'évaluation de focale pour établir une zone (402, 501) à soumettre au calcul d'une valeur d'évaluation de focale utilisée pour déplacer l'objectif de mise au point (D102, D1302, D1802, D2002) vers un point de mise au point ;
une étape d'établissement de zones divisées pour établir un nombre donné de zones divisées (403) avec des tailles données à des positions données dans ladite zone de calcul de valeur d'évaluation de focale définie à l'étape d'établissement de zone de calcul de valeur d'évaluation de focale ;
une étape de vérification de présence/absence de pixel de haute luminosité pour vérifier chacune des zones divisées (403) définies à l'étape d'établissement de zones divisées pour déterminer si un ou plusieurs pixels de haute luminosité (502) sont contenus dans celles-ci ;
une étape de calcul de valeur d'évaluation de focale pour calculer la valeur d'évaluation de focale après l'exclusion, de la zone de calcul de valeur d'évaluation de focale (501), des zones divisées (503) qui ont été déterminées comme contenant dans celles-ci un ou plusieurs pixels de haute luminosité (502) à l'étape de vérification de présence/absence de pixel de haute luminosité ;
une étape de début de commande de mise au point automatique pour débuter une commande de mise au point automatique lors de la détection qu'un objet dont l'image est formée a changé ; et
une étape de déplacement d'objectif de mise au point pour déplacer l'objectif de mise au point (D102, D1302, D1802, D2002) vers un point de mise au point en utilisant la valeur d'évaluation de focale calculée à l'étape de calcul de valeur d'évaluation de focale,
**caractérisé en ce que** :
le procédé comprend une étape d'établissement de seuil de jugement de pixel de haute luminosité pour établir un seuil destiné à être utilisé à l'étape de vérification de présence/absence de pixel de haute luminosité, dans lequel l'étape d'établissement de seuil de jugement de pixel de haute luminosité comprend l'établissement de manière variable d'une valeur de seuil de décision de pixel de haute luminosité appropriée ;
à l'étape d'établissement de seuil de jugement de pixel de haute luminosité, la commande variable du seuil de jugement de pixel de haute luminosité est débutée selon une première synchronisation spécifiée au préalable, dans lequel :
la première synchronisation spécifiée au préalable correspond à un instant auquel il est détecté que l'objet dont l'image est formée a changé, ou
la première synchronisation spécifiée au préalable correspond à un instant auquel il est détecté que l'objet dont l'image est formée a une distribution de luminosité prédéterminée, ou
la première synchronisation spécifiée au préalable correspond à un instant auquel une période de temps prédéterminée s'est écoulée depuis le début de la commande de mise au point automatique, ou
le procédé comprend en outre une étape de détection d'état de dispositif pour détecter un changement d'au moins l'une d'une position d'installation et d'une direction d'installation de l'appareil de traitement de signal d'image, et la première synchronisation spécifiée au préalable correspond à un instant auquel un changement d'au moins l'une de la position d'installation et de la direction d'installation de l'appareil de traitement de signal d'image est détecté,
la commande est effectuée à l'étape de déplacement d'objectif de mise au point pour déplacer l'objectif de mise au point (D102, D1302, D1802, D2002) vers son point de mise au point en utilisant la valeur d'évaluation de focale, et
à l'étape d'établissement de seuil de jugement de pixel de haute luminosité, l'arrêt de la commande variable du seuil de jugement de pixel de haute luminosité est commandé selon une deuxième synchronisation spécifiée au préalable, dans lequel :
la deuxième synchronisation spécifiée au préalable correspond à un instant de jugement que la mise au point est obtenue, ou
la deuxième synchronisation spécifiée au préalable correspond à un instant auquel il est détecté que l'objet dont l'image est formée a une distribution de luminosité prédéterminée, ou
la deuxième synchronisation spécifiée au préalable correspond à un instant auquel une période de temps prédéterminée s'est écoulée depuis le début de la commande de mise au point automatique.
